(19) 

Europäisches
Patentamt
European
Patent Office
Office européen
des brevets

(11) **EP 4 622 128 A1**

(12) **EUROPEAN PATENT APPLICATION**
published in accordance with Art. 153(4) EPC

(43) Date of publication:
**24.09.2025 Bulletin 2025/39**

(21) Application number: **23891587.0**

(22) Date of filing: **14.11.2023**

(51) International Patent Classification (IPC):
**H04B 7/0456** (2017.01)    **H04W 24/10** (2009.01)

(52) Cooperative Patent Classification (CPC):
**H04B 7/0456; H04W 24/10**

(86) International application number:
**PCT/JP2023/040989**

(87) International publication number:
**WO 2024/106440 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.11.2022 JP 2022184650**

(71) Applicant: **NTT DOCOMO, INC.**
**Chiyoda-ku**
**Tokyo 100-6150 (JP)**

(72) Inventors:
• **MATSUMURA, Yuki**
**Tokyo 100-6150 (JP)**
• **SHIBAIKE, Naoya**
**Tokyo 100-6150 (JP)**
• **WANG, Jing**
**Beijing 100190 (CN)**
• **CHEN, Lan**
**Beijing 100190 (CN)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57)    A terminal according to one aspect of the present disclosure includes: a receiving section that receives a configuration of a plurality of combinations of candidate values for a parameter related to numbers of spatial domain basis vectors for N transmission/reception points; and a control section that controls reporting of one combination based on the plurality of combinations, based on the configuration.

$N_{TRP}=4$

$[L_1\ L_2\ L_3\ L_4]$

$N_L=4$ combinations | [6 4 2 2] | [4 2 2 2] | [4 4 2 2] | [4 4 4 2]

Reported combination: [4 2 2 2]

Reported bitmap with $N_{TRP}$ bits (indicating selected TRPs): [1 0 1 0]

Numbers of SD basis vectors: [4 0 2 0]

FIG. 11

EP 4 622 128 A1

## Description

Technical Field

The present disclosure relates to a terminal, a radio communication method, and a base station in next-generation mobile communication systems.

Background Art

In a Universal Mobile Telecommunications System (UMTS) network, the specifications of Long Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication systems (for example, NR), reporting of channel state information (CSI) based on reference signal reception is under study. It is also studied that a plurality of transmission/reception points (multiple Transmission/Reception Points (TRPs), multi-TRP (MTRP)) or a plurality of panels (multiple panels, multi-panel) perform DL transmission to a terminal (user terminal, User Equipment (UE)). Coherent joint transmission (CJT) using multi-TRP/multi-panel is also under study.

Meanwhile, studies have not sufficiently been made on CSI/codebook for CJT. Unless such a method is defined clearly, communication throughput, communication quality, and the like may deteriorate.

In view of this, an object of the present disclosure is to provide a terminal, a radio communication method, and a base station that determine appropriate CSI/codebook for CJT.

Solution to Problem

A terminal according to one aspect of the present disclosure includes: a receiving section that receives a configuration of a plurality of combinations of candidate values for a parameter related to numbers of spatial domain basis vectors for N transmission/reception points; and a control section that controls reporting of one combination based on the plurality of combinations, based on the configuration.

Advantageous Effects of Invention

According to an aspect of the present disclosure, appropriate CSI/codebook for CJT can be determined.

Brief Description of Drawings

[FIG. 1] FIG. 1 shows an example of a 16-level quantization table.
[FIG. 2] FIG. 2 shows an example of an 8-level quantization table.
[FIG. 3] FIGS. 3A and 3B show an example of an enhanced type 2 port selection codebook.
[FIG. 4] FIGS. 4A and 4B show an example of an enhanced type 2 port selection codebook.

[FIG. 5] FIG. 5 shows an example of parameter combinations for a Rel-16 type 2 codebook.

[FIG. 6] FIG. 6 shows an example of parameter combinations for a Rel-17 type 2 port selection codebook.

[FIG. 7] FIG. 7 shows an example of NZCs according to embodiment #B2.

[FIG. 8] FIG. 8 shows another example of the NZCs according to embodiment #B2.

[FIG. 9] FIG. 9 shows an example of combinations of embodiment #C1 and embodiment #C2.

[FIG. 10] FIGS. 10A to 10D each show an example of mapping of CSI part 1.5.

[FIG. 11] FIG. 11 shows an example of combinations and a bitmap according to embodiment #1.

[FIG. 12] FIG. 12 is a diagram to show an example of a schematic structure of a radio communication system according to one embodiment.

[FIG. 13] FIG. 13 is a diagram to show an example of a structure of a base station according to one embodiment.

[FIG. 14] FIG. 14 is a diagram to show an example of a structure of a user terminal according to one embodiment.

[FIG. 15] FIG. 15 is a diagram to show an example of a hardware structure of the base station and the user terminal according to one embodiment.

[FIG. 16] FIG. 16 is a diagram to show an example of a vehicle according to one embodiment.

Description of Embodiments

(CSI Report (or Reporting))

In Rel-15 NR, a terminal (also referred to as a user terminal, a User Equipment (UE), and the like) generates (also referred to as determines, calculates, estimates, measures, and the like) channel state information (CSI), based on a reference signal (RS) (or a resource for the RS), and transmits (also referred to as reports, feeds back, and the like) the generated CSI to a network (for example, a base station). The CSI may be transmitted to the base station by using an uplink control channel (for example, a Physical Uplink Control Channel (PUCCH)) or an uplink shared channel (for example, Physical Uplink Shared Channel (PUSCH)), for example.

The RS used for the generation of the CSI may be at least one of a channel state information reference signal (CSI-RS), a synchronization signal/broadcast channel (Synchronization Signal/Physical Broadcast Channel (SS/PBCH)) block, a synchronization signal (SS), a demodulation reference signal (DMRS), and the like, for example.

The CSI-RS may include at least one of a non-zero power (NZP) CSI-RS and CSI-Interference Management (CSI-IM). The SS/PBCH block is a block including the SS and the PBCH (and a corresponding DMRS), and may be referred to as an SS block (SSB) or the like. The SS may include at least one of a primary synchronization signal (PSS) and a secondary synchronization signal (SSS).

Note that the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), L1-RSRP (reference signal received power in Layer 1 (Layer 1 Reference Signal Received Power)), L1-RSRQ (Reference Signal Received Quality), an L1-SINR (Signal to Interference plus Noise Ratio), an L1-SNR (Signal to Noise Ratio), and the like.

The UE may receive information related to a CSI report (report configuration information), and may control, based on the report configuration information, CSI reporting. The report configuration information may be, for example, an information element (IE) "CSI-ReportConfig" of radio resource control (RRC). Note that, in the present disclosure, the RRC IE may be interchangeably interpreted as an RRC parameter, a higher layer parameter, and the like.

The report configuration information (for example, the RRC IE "CSI-ReportConfig") may include at least one of the following, for example.

- Information (report type information, for example, an RRC IE "reportConfigType") related to a type of the CSI report
- Information (report quantity information, for example, an RRC IE "reportQuantity") related to one or more quantities (one or more CSI parameters) of the CSI to be reported
- Information (resource information, for example, an RRC IE "CSI-ResourceConfigId") related to the resource for the RS used for generation of the quantity (the CSI parameter)
- Information (frequency domain information, for example, an RRC IE "reportFreqConfiguration") related to the frequency domain being a target of the CSI report

For example, the report type information may indicate a periodic CSI (P-CSI) report, an aperiodic CSI (A-CSI) report, or a semi-persistent (semi-permanent) CSI (SP-CSI) report.

The report quantity information may indicate at least one combination of the above CSI parameters (for example, CRI, RI, PMI, CQI, LI, L1-RSRP, and the like).

The resource information may be an ID of the resource for the RS. The resource for the RS may include, for example, a non-zero power CSI-RS resource or SSB, and a CSI-IM resource (for example, a zero power CSI-RS resource).

The frequency domain information may indicate frequency granularity of the CSI report. The frequency granularity may include, for example, a wideband and a subband. The wideband is the entire CSI reporting band. For example, the wideband may be the entire certain carrier (component carrier (CC), cell, serving cell), or may be the entire bandwidth part (BWP) in a certain carrier. The wideband may be interpreted as CSI reporting band, the entire CSI reporting band, and the like.

The subband may be part of the wideband and constituted of one or more resource blocks (RBs or physical resource blocks (PRBs)). The size of the subband may be determined according to the size of the BWP (the number of PRBs).

The frequency domain information may indicate a PMI of which of the wideband or the subband is to be reported (frequency domain information may include, for example, an RRC IE "pmi-FormatIndicator" used for determination of one of wideband PMI reporting and subband PMI reporting). The UE may determine, based on at least one of the report quantity information and the frequency domain information, frequency granularity of the CSI report (that is, one of the wideband PMI report or the subband PMI report).

When the wideband PMI report is configured (determined), one wideband PMI may be reported for the entire CSI reporting band. On the other hand, when the subband PMI report is configured, single wideband indication $i_1$ may be reported for the entire CSI reporting band, and subband indication (one subband indication) $i_2$ for each of one or more subbands in the entire CSI reporting (for example, subband indication for each subband) may be reported.

The UE performs channel estimation by using a received RS to estimate a channel matrix H. The UE feeds back an index (PMI) determined based on the estimated channel matrix.

The PMI may indicate a precoder matrix (also simply referred to as a precoder) that the UE considers appropriate for the use for downlink (DL) transmission to the UE. Each value of the PMI may correspond to one precoder matrix. A set of values of the PMI may correspond to a different set of precoder matrices referred to as a precoder codebook (also simply referred to as a codebook).

In the spatial domain (space domain), the CSI report may include CSI of one or more types. For example, the CSI may include at least one of a first type (type 1 CSI) used for selection of a single beam, and a second type (type 2 CSI) used for selection of multi-beam. The single beam may be interpreted as a single layer, and the multi-beam may be interpreted as a plurality of beams. The type 1 CSI may not assume multi-user multiple input multiple output (MU-MIMO), and the type 2 CSI may assume multi-user MIMO.

The above codebook may include a codebook for the type 1 CSI (also referred to as a type 1 codebook or the like) and a codebook for the type 2 CSI (also referred to as a type 2 codebook or the like). The type 1 CSI may include type 1 single-panel CSI and type 1 multi-panel CSI, and different codebooks (type 1 single-panel codebook, type 1 multi-panel codebook) may be defined.

In the present disclosure, Type 1 and Type I may be interchangeably interpreted. In the present disclosure, Type 2 and Type II may be interchangeably interpreted.

An uplink control information (UCI) type may include at least one of a Hybrid Automatic Repeat reQuest ACKnowledgement (HARQ-ACK), a scheduling request (SR), and CSI. UCI may be delivered on a PUCCH, or may be delivered on a PUSCH.

In Rel-15 NR, the UCI can include one CSI part for wideband PMI feedback. CSI report #n includes, if reported, PMI wideband information.

In Rel-15 NR, the UCI can include two CSI parts for subband PMI feedback. CSI part 1 includes wideband PMI information. CSI part 2 includes one piece of wideband PMI information and some pieces of subband PMI information. CSI part 1 and CSI part 2 are separately coded.

In Rel-15 NR, the UE is configured with N (N ≥ 1) report settings for CSI report configuration and M (M ≥ 1) resource settings for CSI resource configuration, by a higher layer. For example, the CSI report configuration (CSI-ReportConfig) includes a resource setting for channel measurement (resourcesForChannelMeasurement), a CSI-IM resource setting for interference (csi-IM-ResourceForInterference), an NZP-CSI-RS setting for interference (nzp-CSI-RS-ResourceForInterference), a report quantity (reportQuantity), and the like. Each of the resource setting for channel measurement, the CSI-IM resource setting for interference, and the NZP-CSI-RS setting for interference is associated with a CSI resource configuration (CSI-ResourceConfig, CSI-ResourceConfigId). The CSI resource configuration includes a list of CSI-RS resource sets (csi-RS-ResourceSetList, for example, NZP-CSI-RS resource set or CSI-IM resource set).

For enabling, for both of FR1 and FR2, more dynamic channel/interference hypotheses for NCJT, assessment and specifications of CSI reporting for DL transmission with at least one of multi-TRP and multi-panel are under study.

(Codebook Configuration)

The UE is configured with a codebook-related parameter (codebook configuration (CodebookConfig)) by higher layer signaling (RRC signaling). The codebook configuration is included in a CSI report configuration (CSI-ReportConfig) of a higher layer (RRC) parameter.

In the codebook configuration, at least one codebook of a plurality of codebooks including a type 1 single panel (typeI-SinglePanel), type 1 multi-panel (typeI-MultiPanel), type 2 (typeII), and type 2 port selection (typeII-PortSelection) is selected.

The codebook parameter includes a parameter related to codebook subset restriction (CBSR) (...Restriction). Configuration of the CBSR is a bit indicating, for a precoder associated with a CBSR bit, which PMI report is allowed ("1") and which PMI report is not allowed ("0"). 1 bit of a CBSR bitmap corresponds to one codebook index/antenna port.

(CSI Report Configuration)

CSI report configuration (CSI-ReportConfig) of Rel. 16 includes CSI-RS resources for channel measurement (resourcesForChannelMeasurement (CMRs)), CSI-RS resources for interference measurement (csi-IM-ResourcesForInterference (ZP-IMRs), nzp-CSI-RS-ResourcesForInterference (NZP-IMRs)), and the like, in addition to a codebook configuration (CodebookConfig). The parameters of CSI-ReportConfig excluding codebookConfig-r16 are also included in CSI report configuration of Rel. 15.

For Rel. 17, enhanced CSI report configuration (CSI-ReportConfig) for multi-TRP CSI measurement/reporting using NCJT is under study. In the CSI report configuration, two CMR groups corresponding to two respective TRPs are configured. CMRs in the CMR groups may be used for measurement of at least one of multi-TRP using NCJT and a single TRP. N CMR pairs for NCJT are configured by RRC signaling. Whether CMRs of a CMR pair are to be used for single TRP measurement may be configured for the UE by RRC signaling.

For CSI reporting associated with multi-TRP/panel NCJT measurement and configured by a single CSI report configuration, support of at least one of Options 1 and 2 below is under study.

<Option 1>

The UE is configured to report X (X = 0, 1, 2) pieces of CSI associated with single TRP measurement hypotheses and one piece of CSI associated with NCJT measurement. When X = 2, two pieces of CSI are associated with two different single TRP measurements using CMRs of different CMR groups.

<Option 2>

The UE may be configured to report one piece of CSI associated with the best measurement result of measurement hypotheses for NCJT and a single TRP.

As described above, in Rel. 15/16, CBSR is configured for each codebook configuration for each CSI report configuration. In other words, the CBSR is applied to all the CMRs and the like in corresponding CSI reporting configuration.

Note, however, that there is a possibility that when the Options 1 and 2 above are applied to multi-TRP CSI report configuration of Rel. 17 by CSI report configuration, configuration of the following measurement is performed.

Option 1 (X = 0): measurement of only CSI for NCJT
Option 1 (X = 1): measurement of CSI for NCJT and CSI for single TRP (one TRP)
Option 1 (X = 2): measurement of CSI for NCJT and CSI for single TRP (two TRPs)
Option 2: measurement of both of CSI for NCJT and CSI for single TRP

(Type 1 Codebook)

As type 1 codebook (Rel. 15), a type 1 single-panel codebook and a type 1 multi-panel codebook are defined for a base station panel. In a type 1 single panel, an antenna model of a CSI antenna port array (logical configuration) is defined for $(N_1, N_2)$. The number $P_{CSI-RS}$ of CSI-RS antenna ports is $2N_1N_2$. In type 1 multi-panel, an antenna model of a CSI antenna port array (logical configuration) is defined for the number $P_{CSI-RS}$ of CSI-RS antenna ports and $(N_g, N_1, N_2)$.

For Rel-15 type 1 single-panel CSI, a higher layer parameter of a codebook type (subType in type1 in codebookType in CodebookConfig) is set to a type 1 single panel ('type1-SinglePanel') for the UE. The number $v$ of layers $\in \{2, 3, 4\}$ is not satisfied, PMI values correspond to three codebook indices $i_{1,1}, i_{1,2}, i_2$. The number $v$ of layers $\in \{2, 3, 4\}$ is satisfied, PMI values correspond to four codebook indices $i_{1,1}, i_{1,2}, i_{1,3}, i_2$. The number $v$ of layers $\in \{2, 3, 4\}$ is not satisfied, composite codebook index $i_1 = [i_{1,1}\ i_{1,2}]$. The number $v$ of layers $\in \{2, 3, 4\}$ is satisfied, composite codebook index $i_1 = [i_{1,1}\ i_{1,2}\ i_{1,3}]$. $i_1$ may denote an index for wideband. $i_2 = n$ may denote an index for subband/phase.

For $P_{CSI-RS}$, supported configurations (value combinations) of $(N_1, N_2)$ and $(O_1, O_2)$ are defined in a specification.

($N_1$, $N_2$) indicates the number of two-dimensional (2D) antenna elements, and is configured by a higher layer parameter n1-n2 in moreThanTwo in nrOfAntennaPorts in typeI-SinglePanel. n1-n2 denotes an $N_1 O_1 N_2 O_2$-bit bitmap parameter. ($O_1$, $O_2$) denotes a 2D oversampling factor.

In a codebook for 1-layer CSI reporting and codebook mode (codebookMode) = 1, an index $i_{1,1}$ corresponding to a horizontal beam holds $i_{1,1} = l = 0, 1, ..., N_1 O_1 - 1$, an index $i_{1,2}$ corresponding to a vertical beam holds $i_{1,2} = m = 0, 1, ..., N_2 O_2 - 1$, $i_2$ holds $i_2 = n = 0, 1, 2, 3$, and a matrix for 1-layer CSI report codebook using antenna ports 3000 to 2999 + $P_{CSI-RS}$ is $W\_i_{1,1}, i_{1,2}, i_2^{(1)}$. Here, $W_{l,m,n}^{(1)}$ is given by the following equation.

$$W_{l,m,n}^{(1)} = \frac{1}{\sqrt{P_{CSI-RS}}} \begin{bmatrix} v_{l,m} \\ \varphi_n v_{l,m} \end{bmatrix} \qquad (X1)$$

Here, $v_{l,m}$ denotes an $N_1$-row $N_2$-column 2D-SD-DFT basis vector $(\exp(j2\pi l n_1 / O_1 N_1) \times \exp(j2\pi m n_2 / O_2 N_2)$, $n_1 = 0, 1, ..., N1 - 1$, $n_2 = 0, 1, ..., N_2 - 1)$. Inter-polarization (horizontal polarization and vertical polarization) co-phasing $\varphi_n$ holds $\varphi_n = \exp(j\pi n/2)$ to indicate, with respect to the phase of one polarization, the phase of the other polarization.

For Rel-15 type 1 multi-panel CSI, as compared with that for the type 1 single panel, the number $N_g$ of panels is configured in addition to $N_1$, $N_2$. As inter-panel co-phasing (phase compensation between panels, phasing), $i_{1,4}$ is additionally reported. The same SD beam (precoding matrix $W_l$) is selected for each panel, and only inter-panel co-phasing is additionally reported.

For $P_{CSI-RS}$, supported configurations (value combinations) of ($N_g$, $N_1$, $N_2$) and ($O_1$, $O_2$) are defined in a specification. ($N_1$, $N_2$) is configured by ng-n1-n2 in typeI-MultiPanel. $i_{1,1}$ is $\{0, 1, ..., N_1 O_1 - 1\}$. $i_{1,2}$ is $\{0, 1, ..., N_2 O_2 - 1\}$. For $q = 1, ..., N_g - 1$, $i_{1,4,q}$ is $\{0, 1, 2, 3\}$. $i_2$ is $\{0, 1, 2, 3\}$. For codebookMode=1, a matrix for a 1-layer CSI report codebook using antenna ports 3000 to (2999 + $P_{CSI-RS}$) is $W\_i_{1,1}, i_{1,2}, i_{1,4}, i_2^{(1)}$. Here, $W_{l,m,p,n}^{(1)} = W_{l,m,p,n}^{1,N_g,1}$.

$W\_l,m,p,n^{1,N_g,1}$ and $W\_l,m,p,n^{2,N_g,1}$ for $N_g=\{2, 4\}$ (matrix $W_{l,m,p,n}^{1,2,1}$ for the first layer, $N_g=2$, codeBookMode=1, matrix $W_{l,m,p,n}^{2,2,1}$ for the second layer, $N_g=2$, codeBookMode=1, matrix $W_{l,m,p,n}^{1,4,1}$ for the first layer, $N_g=4$, codeBookMode=1, and matrix $W_{l,m,p,n}^{2,4,1}$ for the second layer, $N_g=4$, codeBookMode=1) are given by the following equations.

$$W_{l,m,p,n}^{1,2,1} = \frac{1}{\sqrt{P_{CSI-RS}}} \begin{bmatrix} v_{l,m} \\ \varphi_n v_{l,m} \\ \varphi_{p_1} v_{l,m} \\ \varphi_n \varphi_{p_1} v_{l,m} \end{bmatrix} \qquad W_{l,m,p,n}^{2,2,1} = \frac{1}{\sqrt{P_{CSI-RS}}} \begin{bmatrix} v_{l,m} \\ -\varphi_n v_{l,m} \\ \varphi_{p_1} v_{l,m} \\ -\varphi_n \varphi_{p_1} v_{l,m} \end{bmatrix}$$

$$W_{l,m,p,n}^{1,4,1} = \frac{1}{\sqrt{P_{CSI-RS}}} \begin{bmatrix} v_{l,m} \\ \varphi_n v_{l,m} \\ \varphi_{p_1} v_{l,m} \\ \varphi_n \varphi_{p_1} v_{l,m} \\ \varphi_{p_2} v_{l,m} \\ \varphi_n \varphi_{p_2} v_{l,m} \\ \varphi_{p_3} v_{l,m} \\ \varphi_n \varphi_{p_3} v_{l,m} \end{bmatrix} \qquad W_{l,m,p,n}^{2,4,1} = \frac{1}{\sqrt{P_{CSI-RS}}} \begin{bmatrix} v_{l,m} \\ -\varphi_n v_{l,m} \\ \varphi_{p_1} v_{l,m} \\ -\varphi_n \varphi_{p_1} v_{l,m} \\ \varphi_{p_2} v_{l,m} \\ -\varphi_n \varphi_{p_2} v_{l,m} \\ \varphi_{p_3} v_{l,m} \\ -\varphi_n \varphi_{p_3} v_{l,m} \end{bmatrix}$$

$$(X2)$$

Here, $\varphi_n = e^{j\pi n/2}$. For $N_g=2$, p = $p_1$, and for $N_g=4$, p = $[p_1, p_2, p_3]$. $\varphi\_p_1$, $\varphi\_p_2$, and $\varphi\_p_3$ indicate inter-panel co-phasing. The same beam (SD beam matrix, precoding matrix $W_1$) is selected for panels 0, 1, 2, and 3, and $\varphi\_p_1$, $\varphi\_p_2$, and $\varphi\_p_3$ indicate phase compensation for panel 1, phase compensation for panel 2, and phase compensation for panel 3 relative to panel 0, respectively.

(Type 2 Codebook)

In the present disclosure, matrix Z with X rows and Y columns is sometimes expressed as $Z(X \times Y)$.

For type 2 CSI of Rel. 15, generation of per-subband (SB-wise) precoding vectors is based on the following equation for given layer l.

$$W_1(N_t \times N_3) = W_1 W_{2,1} \quad (X3)$$

$N_t$ denotes the number of antennas/antenna ports. $N_3$ denotes a total number of precoding (beamforming) matrices (precoders) (number of subbands) indicated by a PMI. $W_1(N_t \times 2L)$ denotes a matrix (SD beam matrix) formed by $L \in \{2, 4\}$ (oversampled) spatial domain (SD) 2D DFT vectors (SD beams, 2D-DFT vectors). L is the number of beams. The actual number of beams taking account of a horizontal polarization and a vertical polarization at one point is 2L. For example, L=2 SD 2D-DFT vectors are $b_i$ and $b_3$. $W_{2,l}(2L \times N_3)$ denotes a matrix formed by linear combination (LC) coefficients (subband complex LC coefficients, combination coefficients) for layer l (LC coefficient matrix). $W_{2,l}$ indicates beam selection and co-phasing between two polarizations. For example, two $W_{2,l}$ are $c_i$ and $c_j$. For example, channel vector h is approximated by linear combination of (L = 2) SD 2D-DFT vectors $c_i b_i$, $+c_j b_j$. Feedback overhead is primarily caused by LC coefficient matrix $W_{2,l}$. The type 2 CSI of Rel. 15 supports only ranks 1 and 2.

In type 2 CSI, channels (channel matrix) for a given user is expressed by a linear combination of two polarizations and L beams (L 2D-DFT vectors). The type 2 CSI of Rel. 15 supports ranks 1 and 2.

(Enhancement of Type 2 Codebook)

Type 2 CSI of Rel. 16 (enhanced type 2 codebook) reduces overhead related to $W_{2,l}$ by using frequency domain (FD) compression. The type 2 CSI of Rel. 16 supports ranks 3 and 4 in addition to ranks 1 and 2.

In the type 2 CSI of Rel. 16, information based on the following equation is reported by the UE for given layer l.

$$W_1 = W_1 \tilde{W}_1 W_{f,1}^{H} \quad (X4)$$

$W_{2,l}$ is approximated by $\tilde{W}_l W_{f,l}^{H}$. Matrix $\tilde{W}$ may be expressed by adding ~ to the top of W (tilde on w). $\tilde{W}_l$ may be expressed as $\tilde{W}_{2,l}$. Matrix $W_{f,l}^{H}$ is an adjoint matrix of $W_{f,l}$ and is obtained by adjoint transpose of $W_{f,l}$.

For a CSI report, the UE may be configured with one of two subband sizes. The subband (CQI subband) may be defined as $N_{PRB}^{SB}$ consecutive PRBs, and may depend on a total number of PRBs in a BWP. The number R of PMI subbands per CQI subband is configured by an RRC IE (numberOfPMI-SubbandsPerCQI-Subband). R controls a total number $N_3$ of precoding matrices indicated by a PMI, as a function of the number of subbands configured in csi-ReportingBand, a subband size configured by subbandSize, and a total number of PRBs in a BWP.

$W_1(N_t \times 2L)$ is a matrix formed by a plurality of (oversampled) spatial domain (SD) 2D-DFT (vectors, beams). For this matrix, a plurality of indices of two-dimensional discrete Fourier transform (2D-DFT) vectors and a two-dimensional over-sampling factor are reported. Response/distribution of a spatial domain indicated by an SD 2D-DFT vector may be referred to as an SD beam.

$\tilde{W}_l(2L \times M_v)$ denotes a matrix formed by LC coefficients. For this matrix, up to $K_0$ non-zero coefficients (NZCs) (non-zero amplitude LC coefficients) are reported. The report is formed by two parts: a bitmap for identifying an NZC location, and a quantized NZC.

$W_{f,l}(N_3 \times M_v)$ denotes a matrix formed by a plurality of frequency domain (FD) bases (vectors) for layer l. $N_3$ denotes a total number of precoding (beamforming) matrices (precoders) (number of subbands) indicated by a PMI, as a function of the number of subbands configured in csi-ReportingBand. csi-ReportingBand indicates, when CSI for a given BWP is reported, consecutive or non-consecutive subbands in the BWP. $M_v$ FD bases (FD DFT bases) are present for each layer. When $N_3 > 19$, $M_v$ FD bases from an intermediate subset (InS) of size $N_3'$ ($<N_3$) are selected. In a case of $N_3 \leq 19$, $\log_2(C(N_3 - 1, M_v - 1))$ bits are reported. Here, $C(N_3 - 1, M_v - 1)$ denotes the number of combinations to select $M_v - 1$ from $N_3 - 1$ (combinatorial coefficient $C(x, y)$), and is also referred to as binomial coefficients.

Response/distribution (frequency response) of a frequency domain indicated by an FD basis vector and linear combination of LC coefficients may be referred to as an FD beam. The FD beam may correspond to a delay profile (time response).

A PMI subband size is given by a CQI subband size/R, and $R \in \{1, 2\}$. The number $M_v$ of FD bases for given rank v is given by $ceil(p_v \times N_3/R)$. The number of FD bases is the same for all the layers $l \in \{1, 2, 3, 4\}$. $p_v$ is configured by a higher layer.

An FD basis (DFT) for index $t = 0, 1, ..., N3 - 1$ associated with a precoding matrix (subband) and layer $l = 1, ..., v$ is $y_{t,l}^{(f)} = exp(j2\pi t n_{3,l}^{(f)}/N_3)$. Among $M_v$ FD basis vectors, FD basis vectors for index $f = 0, 1, ..., M_v - 1$ associated with the FD basis vectors are $[y_{0,l}^{(f)}, y_{1,l}^{(f)}, ..., y_{N\_3-1,l}^{(f)}]^T$. $M_v$ FD basis vectors are identified by $M_{initial} \in \{-2M_v + 1, -2M_v + 2, ..., 0\}$, $n_{3,l} = [n_{3,l}^{(0)}, ..., n_{3,l}^{(M\_v-1)}]$, and $n_{3,l}^{(f)} \in \{0, 1, ..., N_3 - 1\}$.

Each row of matrix $W_{2,l}$ indicates channel frequency response of a specific SD beam. When the SD beam has high directivity, a channel tap per beam is limited (power delay profile becomes sparse in the time domain). As a result, channel frequency response for each SD beam has high correlation (becomes close to a flat form in the frequency domain). In this case, the channel frequency response can be approximated by linear combination of a small number of FD bases. For example, in a case of $M_v = 2$, by using FD bases $f_2$, $f_q$ and LC coefficients $d_1^0$, $d_2^0$, frequency response associated with SD beam $b_0$ is approximated by $d_1^0 f_2 +$, $d_2^0 f_q$.

$M_v$ dominant FD bases are selected. With $M_v << N_3$, overhead of $W^\sim_l$ results in being much smaller than overhead of $W_{2,l}$. All or some of the $M_v$ FD bases are used to approximate frequency response of each SD beam. A bitmap is used to report only an FD basis selected for each SD beam. If no bitmap is reported, all the FD bases are selected for each SD beam. In this case, NZCs of all the FD bases are reported for each SD beam. The number $Kl^{NZ}$ of NZCs in one layer $\leq K_0 = ceil(\beta \times 2LM_v)$, and the number $K^{NZ}$ of NZCs across all the layers $\leq 2K_0 = ceil(\beta \times 2LM_v)$. $\beta$ is configured by a higher layer.

In a Rel-16 (enhanced) type 2 codebook, L, $\beta$, and $p^v$ (parameter combination) values are determined by a higher layer parameter paramCombination-r16 (codebook parameter configuration).

Type 2 CSI feedback on a PUSCH in Rel. 16 includes two parts. CSI part 1 has a fixed payload size, and is used to identify the number of information bits in CSI part 2. A size of part 2 is variable (UCI size depends on the number of NZCs that is not recognized by the base station). In CSI part 1, the UE reports the number of NZCs that determines the size of CSI part 2. After receiving CSI part 1, the base station recognizes the size of CSI part 2.

In enhanced type 2 CSI feedback, CSI part 1 includes an RI, a CQI, and an indication of a total number of non-zero amplitudes (NZCs) across a plurality of layers for enhanced type 2 CSI. Fields of Part 1 are separately coded. CSI part 2 includes a PMI of enhanced type 2 CSI. Parts 1 and 2 are separately coded. CSI part 2 (PMI) includes at least one of an oversampling factor, an index of a 2D-DFT basis, an index $M_{initial}$ of an initial DFT basis (start offset) of a selected DFT window, a DFT basis selected for each layer, an NZC (amplitude and phase) per layer, a strongest (maximum strength, maximum amplitude) coefficeint indicator (SCI) per layer, and amplitude of the strongest coefficient per layer/per polarization.

A plurality of PMI indices (PMI values, codebook indices) associated with different pieces of CSI part 2 information may follow the following for the l-th layer.

- $i_{1,1}$: two-dimensional oversampling factor $[q_1 \ q_2]$. $q_1 \in \{0, 1, ..., O_1 - 1\}$, $q_2 \in \{0, 1, ..., O_2 - 1\}$
- $i_{1,2}$: plurality of indices of (SD) 2D-DFT bases (beams). $i_{1,2} \in \{0, 1, ..., C(N_1N_2, L) - 1\}$
- $i_{1,5}$: codebook indicator. Index of (FD) DFT basis of a selected DFT window $i_{1,5} \in \{0, 1, ..., 2M_v - 1\}$
- $i_{1,6,l}$: codebook indicator. (FD) DFT basis selected for the l-th layer. In a case of $N_3 \leq 19$, $i_{1,6,l} \in \{0, 1, ..., C(N_3 - 1, M_v - 1) - 1\}$ holds. In a case of $N_3 > 19$, $i_{1,6,l} \in \{0, 1, ..., C(2M_v - 1, M_v - 1) - 1\}$ holds.
- $i_{1,7,l}$: bitmap indicator for l-th layer. Each non-zero bit in the bitmap identifies a coefficient in $i_{2,4,l}$ and $i_{2,5,l}$ to be reported. $i_{1,7,l} = [k_{l,0}^{(3)} ... k_{l,M\_v-1}^{(3)}]$, $k_{l,f}^{(3)} = [k_{l,0,f}^{(3)} ... k_{l,M\_v-1,f}^{(3)}]$, $k_{l,i,f}^{(3)} \in \{0, 1\}$
- $i_{1,8,l}$: strongest indicator for l-th layer (largest element $k_{l,i,l}^{(2)}$ among amplitude coefficient indicators)
- $i_{2,3,l}$: amplitude coefficient indicator of coefficients (of both polarizations) (wideband) of the l-th layer. $i_{2,3,l} = [k_{l,0}^{(1)} \ k_{l,1}^{(1)}]$
- $i_{2,4,l}$: amplitude coefficient indicator of reported coefficients (subband) for the 1-th layer. $i_{2,3,1} = [k_{l,0}^{(2)} ... k_{l,M\_v-1}^{(2)}]$
- $i_{2,5,l}$: phase coefficient indicator of reported coefficients (subband) of the l-th layer. $i_{2,5,l} = [c_{l,0,f} ... c_{l,M\_v-1,f}]$

Assume $f_l^* \in \{0, 1, ..., M_v - 1\}$ as the index of $i_{2,4,l}$ and $i_l^* \in \{0, 1, ..., 2L - 1\}$ as the index of $k_{l,f\_l^{\wedge*}}^{(2)}$. $f_l^*$ and $i_l^*$ here identify the strongest coefficient for layer $l = 1, ..., v$, in other words, element $k_{l,i\_l^{\wedge*},f\_l^{\wedge*}}^{(2)}$ of $i_{2,4,l}$ for layer l. Codebook index $n_{3,l}$ is remapped as $n_{3,l}^{(f)} = (n_{3,l}^{(f)} - n_{3,l}^{(f\_l^{\wedge*})}) \mod N_3$ for $n_{3,l}^{(f\_l^{\wedge*})}$ to obtain $n_{3,l}^{(f\_l^{\wedge*})} = 0$ after the remapping. Index f is remapped as $f = (f - f_l^*) \mod M_v$ for $f_l^*$ to obtain $f_l^* = 0$ ($l = 1, ..., v$) after the remapping. $i_{2,4,l}$, $i_{2,5,l}$, and $i_{1,7,l}$ denote an amplitude coefficient, a phase coefficient, and a bitmap after remapping. The strongest coefficient of layer l identified by $i_{1,8,l} \in \{0, 1, ..., 2L - 1\}$ is given as $i_{1,8,l} = \Sigma_{i=0}^{i\_l^{\wedge*}-1} k_{l,i,0}^{(3)} - 1$ for $v = 1$ and $i_{1,8,l} = i_l^*$ for $1 < v \leq 4$.

Each reported LC coefficient (complex coefficient) in $W^\sim_l$ is separately quantized amplitude and phase.

{Amplitude Quantization}

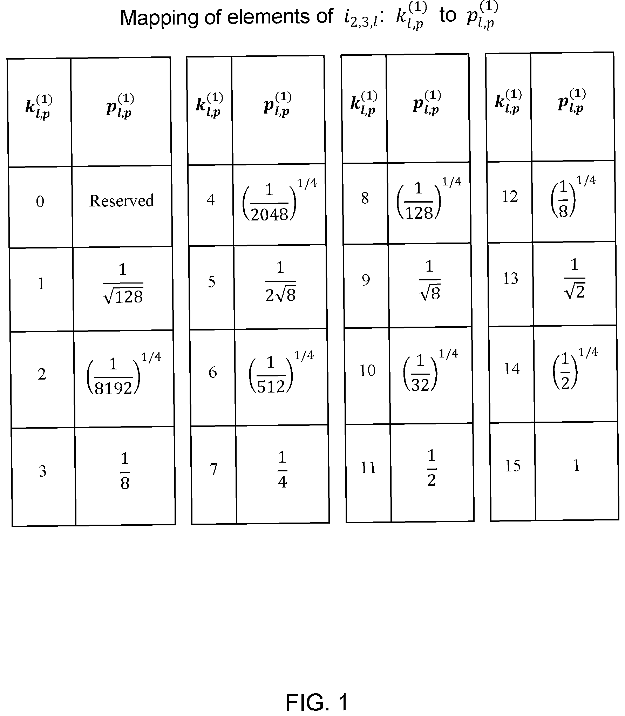

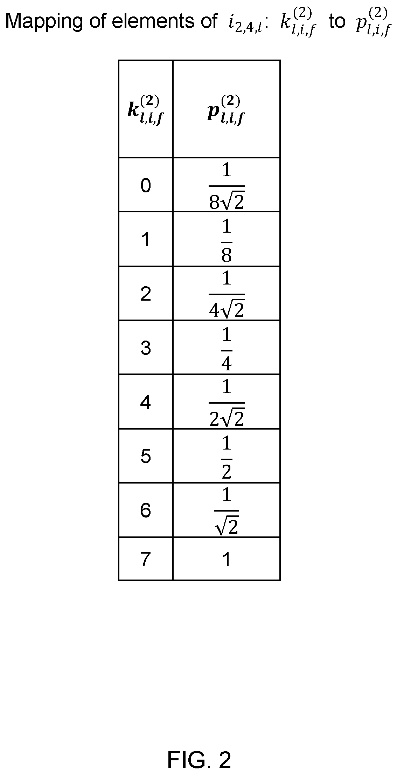

Polarization-specific reference amplitude is 16-level quantization using a table of FIG. 1 (mapping of elements in amplitude coefficient indicator $i_{2,3,l}$: mapping from amplitude coefficient indicator element $k_{l,p}^{(1)}$ to amplitude coefficient $p_{l,p}^{(1)}$). With this table, $p_l^{(1)} = [p_{l,0}^{(1)} \, p_{l,1}^{(1)}]$ is quantized to $[k_{l,0}^{(1)} \, k_{l,1}^{(1)}]$, $k_{l,p}^{(1)} \in \{0, ..., 15\}$. All the other coefficients are 8-level quantization using a table of FIG. 2 (mapping of elements in amplitude coefficient indicator $i_{2,4,l}$: mapping from amplitude coefficient indicator element $k_{l,i,f}^{(2)}$ to amplitude coefficient $p_{l,i,f}^{(2)}$). With this table, $p_l^{(2)} = [p_{l,0}^{(2)} \, p_{l,M\_v-1}^{(2)}]$ and $p_{l,f}^{(2)} = [p_{l,0,f}^{(2)} \, p_{l,2L-1,f}^{(2)}]$ are quantized to $k_{l,f}^{(2)} = [k_{l,0,f}^{(2)} ... k_{l,2L-1,f}^{(2)}]$, $k_{l,i,f}^{(2)} \in \{0, ..., 7\}$.

{Phase Quantization}

Elements (amplitude coefficient indicator elements) $[c_{l,0} ... C_{l,M\_v-1}]$ in amplitude coefficient indicator $i_{2,5,l}$ are reported by a UE (using four bits). All the phase coefficients are quantized by using 16-PSK. A phase coefficient in quantity $\varphi_{l,i,f} = \exp(j2\pi c_{l,i,f}/16)$ for co-phasing is quantized to $c_{l,f} = [c_{l,0,f} ... c_{l,2L-1,f}]$, $c_{l,i,fi} \in \{0, ..., 15\}$.

Amplitude coefficient indicator element $k_{l,\text{floor}(i\_l^{\wedge*}/L)}^{(1)}$ corresponding to the strongest coefficient of layer l holds $k_{l,\text{floor}(i\_l^{\wedge*}/L)}^{(1)} = 15$ (maximum value), amplitude coefficient indicator element $k_{l,i\_l^{\wedge*},0}^{(2)}$ corresponding to the strongest coefficient of layer l holds $k_{l,i\_l^{\wedge*},0}^{(2)} = 7$ (maximum value), and phase coefficient indicator element $c_{l,i\_l^{\wedge*},0}^{(2)}$ corresponding to the strongest coefficient of layer l holds $c_{l,i\_l^{\wedge*},0}^{(2)} = 0$ (minimum value). $k_{l,\text{floor}(i\_l^{\wedge*}/L)}^{(1)}$, $k_{l,i\_l^{\wedge*},0}^{(2)}$, and $C_{l,i\_l^{\wedge*},0}^{(2)} = 0$ are not reported for $l = 1, ..., v$.

$i_{1,5}$ and $i_{1,6,l}$ are PMI indices for (FD) DFT basis reporting. $i_{1,5}$ is reported only when $N_3 > 19$.

Matrix $W^{(v)}$ expressed by a codebook for v-layer (v = 1 to 4) CSI reporting using 3000 to (2999 + $P_{\text{CSI-RS}}$) is based on matrix $W^l$ below for layer l (= 1 to v).

$$W^l_{q_1,q_2,n_1,n_2,n_{3,l},p_l^{(1)},p_l^{(2)},i_{2,5,l},t}$$

$$= \frac{1}{\sqrt{N_1 N_2 \gamma_{t,l}}} \begin{bmatrix} \sum_{i=0}^{L-1} v_{m_1^{(i)},m_2^{(i)}} p_{l,0}^{(1)} \sum_{f=0}^{M_v-1} y_{t,l}^{(f)} p_{l,i,f}^{(2)} \varphi_{l,i,f} \\ \sum_{i=0}^{L-1} v_{m_1^{(i)},m_2^{(i)}} p_{l,1}^{(1)} \sum_{f=0}^{M_v-1} y_{t,l}^{(f)} p_{l,i+L,f}^{(2)} \varphi_{l,i+L,f} \end{bmatrix}, l = 1,2,3,4,$$

$$\gamma_{t,l} = \sum_{i=0}^{2L-1} \left( p_{l,\lfloor \frac{i}{L} \rfloor}^{(1)} \right)^2 \left| \sum_{f=0}^{M_v-1} y_{t,l}^{(f)} p_{l,i,f}^{(2)} \varphi_{l,i,f} \right|^2$$

$$(Y1)$$

Here, the following holds: beam index $i = 0, 1, ..., L - 1$, $m_1^{(i)} = O_1 n_1^{(i)} + q_1$, $m_2^{(i)} = O_2 n_2^{(i)} + q_2$, $n_1^{(i)} \in \{0, 1, ..., N_1 - 1\}$, $n_2^{(i)} \in \{0, 1, ..., N_2 - 1\}$. $v_{m\_1^{\wedge}(i),m\_2^{\wedge}(i)}$ denotes an SD (beam)-DFT basis, and $p_{l,0}^{(1)}$ and $p_{l,i,f}^{(2)}$ denote amplitude coefficients, and $\varphi_{l,i,f}$ denotes a phase coefficient. As described above, a codebook for each layer includes the strongest coefficient for each polarization, an amplitude coefficient for each polarization, each FD-DFT basis, and each SD-DFT basis, and a phase coefficient for each polarization, each FD-DFT basis, and each SD-DFT basis.

As grouping of CSI parts 2, for a given CSI report, PMI information is grouped into three groups (groups 0 to 2). This is important for a case where CSI omission is performed. Each reported element of indices $i_{2,4,l}$, $i_{2,5,l}$, and $i_{1,7,l}$ is associated with a specific priority rule. Groups 0 to 2 follow the following.

- Group 0: indices $i_{1,1}$, $i_{1,2}$ and $i_{1,8,l}$ (l = 1, ..., v)
- Group 1: highest (higher) $v2LM_v$-floor($K^{NZ}/2$) priority elements in index $i_{1,5}$ (if reported) and indices $i_{1,6,l}$ and $i_{1,7,l}$ (if reported), highest (higher) ceil($K^{NZ}/2$)-v priority elements in $i_{2,3,l}$ and $i_{2,4,l}$, and highest (higher) ceil($K^{NZ}/2$)-v priority elements in $i_{2,5,l}$ (l = 1, ..., v)
- Group 2: lowest (lower) floor ($K^{NZ}/2$) priority elements in $i_{1,7,l}$, lowest (lower) floor ($K^{NZ}/2$) priority elements in $i_{2,4,l}$, and lowest (lower) floor ($K^{NZ}/2$) priority elements in $i_{2,5,l}$ (l = 1, ..., v)

In type 1 CSI, an SD beam indicated by an SD DFT vector is transmitted to the UE. In type 2 CSI, L SD beams are linearly coupled and transmitted to the UE. Each SD beam can be associated with a plurality of FD beams. For corresponding SD beams, channel frequency response can be obtained by using linear combination of FD basis vectors for the SD beams. The channel frequency response corresponds to the power delay profile.

(Type 2 Port Selection Codebook/Enhancement/Further Enhancement)

In type 2 port selection (PS) CSI of Rel. 15 (type 2 PS codebook), a UE does not need to derive an SD beam in consideration of 2D-DFT as in type 2 CSI. A base station transmits CSI-RSs by using K CSI-RS ports beamformed in consideration of a set of SD beams. The UE selects/identifies the best L ($\leq$K) CSI-RS ports for each polarization, and reports indices of these ports in $W_1$. The type 2 PS CSI of Rel. 15 supports ranks 1 and 2.
Operation of type 2 PS CSI of Rel. 16 (enhanced type 2 PS codebook) is similar to that of type 2 CSI of Rel. 16 except for selection of an SD beam. The type 2 PS CSI of Rel. 15 supports ranks 1 to 4.
For layer l $\in$ {1, 2, 3, 4}, per-subband (subband (SB)-wise) precoder generation is given by the following equation.

$$W_l(N_t \ \times \ N_3) \ = \ QW_1 \tilde{W}_l W_{f,l}^H \qquad (Y2)$$

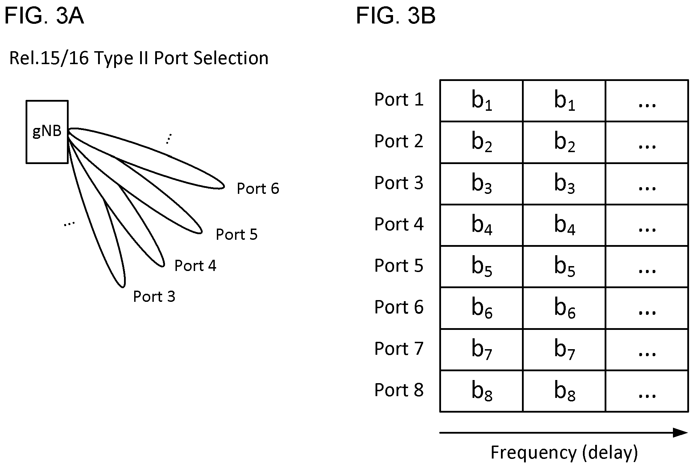

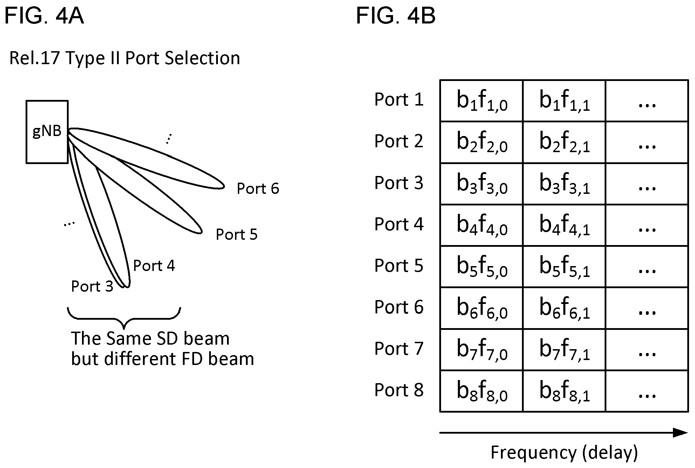

Here, Q(Nt $\times$ K) indicates K SD beams used for CSI-RS beamforming. $W_1$(K $\times$ 2L) is a block diagonal matrix. $\tilde{W}_l$ (2L $\times$ M) is an LC coefficient matrix. $W_{f,l}$($N_3 \times$ M) is formed by $N_3$ FD-DFT basis vectors (FD basis vectors). K is configured by a higher layer. L is configured by a higher layer. $P_{CSI-RS} \in$ {4, 8, 12, 16, 24, 32}. When $P_{CSI-RS}$ > 4, L $\in$ {2,3,4}.
In type 2 PS CSI of Rel. 15/16, each CSI-RS port #i is associated with an SD beam ($b_i$) (FIGS. 3A and 3B).
In type 2 PS CSI of Rel. 16 as type 2 CSI of Rel. 16, the number of FD bases is reduced $N_3$ to $M_v$ ($M_v$ << $N_3$) to thereby reduce overhead compared to that of type 2 PS CSI of Rel. 15.
In type 2 port selection CSI/codebook of Rel. 17 (further enhanced type 2 port selection codebook), each CSI-RS port #i is associated with an SD-FD beam pair (pair of SD beam $b_i$ and FD beam $f_{i,j}$ (where j is a frequency index)) in place of an SD beam (FIGS. 4A and 4B). In this example, ports 3 and 4 are associated with the same SD beam and are associated with different FD beams.
Frequency selectivity of channel frequency response observed by the UE, based on an SD beam-FD beam pair can be reduced by delay pre-compensation more than frequency selectivity of channel frequency response observed by the UE, based on an SD beam.
A primary scenario for the type 2 port selection codebook of Rel. 17 is FDD. Channel reciprocity based on SRS measurement is not perfect (UL beam and DL beam may be different from each other in angle, UL frequency and DL frequency are different from each other in FDD, the UL frequency and the DL frequency are different from each other in effective antenna spacing). However, a base station can obtain/select some pieces of partial information (dominant angle and delay (SD beam and FD beam)). By using SRS measurement by the base station in addition to CSI reporting, the base station can obtain CSI for determination of a DL MIMO precoder. In this case, some CSI reports may be omitted to reduce CSI overhead.
In a Rel-17 (further enhanced) type 2 port selection codebook, $\alpha$, M, and $\beta$, (parameter combination) values are determined by a higher layer parameter paramCombination-r17 (codebook parameter configuration). A precoding matrix indicated by a PMI is determined from (L + M) vectors. Here, L = $K_1$/2, and K1 = $\alpha P_{CSI-RS}$.
In type 2 PS CSI of Rel. 17, each CSI-RS port is beamformed by using an SD beam and an FD basis vector. Each port is associated with an SD-FD pair.
For given layer l, information based on the following equation may be reported by the UE.

$$W_l(K \ \times \ N_3) \ = \ W_1 \tilde{W}_l W_{f,l}^H \ (Y3)$$

For $W_1$(K $\times$ 2L), each matrix block is formed by L columns of a (K $\times$ K) identity matrix. The base station transmits K beamformed CSI-RS ports. Each port is associated with an SD-FD pair. The UE selects L ports from K ports, and reports, as part of PMI($W_{1,l}$), the selected ports to the base station. Note that, in Rel. 16, each port is associated with an SD beam.
$\tilde{W}_l$(2L $\times M_v$) is a matrix formed by combination coefficients (subband complex LC coefficients). UP to $K_0$ NZCs are reported. The report is formed by two parts: a bitmap for identifying an NZC location, and a quantized NZC. In a specific case, the bitmap can be omitted. Note that, in Rel. 16, the bitmap for the NZC location is always reported.
$W_{f,l}$($N_3 \times M_v$) is a matrix formed by $N_3$ FD basis (FD DFT basis) vectors. $M_v$ FD bases are present for each layer. The base station may delete $W_{f,l}$. When $W_{f,l}$ is ON, $M_v$ additional FD bases are reported. When $W_{f,l}$ is OFF, no additional FD bases are reported. Note that, in Rel. 16, $W_{f,l}$ is always reported.

(JT)

Joint transmission (JT) may mean simultaneous data transmission from a plurality of points (for example, TRPs) to a single UE.

Rel. 17 supports non-coherent joint transmission (NCJT) from two TRPs. PDSCHs from the two TRPs may be independently precoded and independently decoded. Frequency resources may be nonoverlapping, partially overlapping (partial-overlapping), or fully overlapping (full-overlapping). When the overlap occurs, a PDSCH from one TRP interferes with a PDSCH from another TRP.

For Rel. 18, support of coherent joint transmission (CJT) using up to four TRPs is under study. Data from four TRPs may be coherently precoded and transmitted to the UE on the same time-frequency resource. For example, the same precoding matrix may be used in consideration of channels from four TRPs. Coherent may mean that phases of a plurality of received signals have a certain relationship with each other. Signal quality may be improved by using 4-TRP joint precoding to have no interference between the four TRPs. The data may receive only interference outside the four TRPs.

(Rel-17 NCJT CSI)

In Rel. 17, a scenario to which NCJT CSI reporting can be applied is single-DCI based MTRP NCJT with a type 1 single-panel codebook. For NCJT CSI measurement, two CMR groups can be configured with each channnel measurement resource (CMR) from one TRP, in single CSI-ReportConfig. One CSI report mode can be configured with two modes.

By RRC signaling, CSI-ReportConfig for Rel-17 non-coherent joint transmission (NCJT) CSI configures CMRs and a CSI report mode (csi-ReportMode).

Two CMR groups with ($K_s = K_1 + K_2$) CMRs are configured for the UE. $2 \leq K_s \leq 8$ holds. $K_s$ CMRs correspond to NZP-CSI-RS resource sets for channel measurement. $K_1$ and $K_2$ are the numbers of CMRs in the two respective CMR groups. By being selected from all the possible pairs, N CMR pairs (N pairs of CMRs) are configured by a higher layer. N = 1 and $K_s = 2$ are supported. Support of $N_{max} = 2$ is an optional feature of the UE. Support of $K_{S,max} = X$ is an optional feature of the UE. Each CMR can include up to 32 CSI-RS ports according to UE capability. Each CMR pair can be associated with one CRI value.

A bitmap by RRC signaling indicates one CMR from each CMR group to thereby indicate N (N = 1, 2) CMR pair(s) to be actually used for NCJT measurement. The UE uses CMRs in the two CMR groups to measure single-TRP CSI for TRP1 and single-TRP CSI for TRP2, and uses N CMR pair(s) to measure NCJT CSI.

The UE selects one or more pieces of CSI to report, based on a mode configured by csi-ReportMode. csi-ReportMode indicates one of two modes, i.e., modes 1 and 2 below.

At least one of modes 1 and 2 below is supported.

{Mode 1}

The UE may be configured to report X pieces of CSI associated with a single-TRP measurement hypothesis and one piece of CSI associated with an NCJT measurement hypothesis. X = 0, 1, 2. When X = 2, two pieces of CSI are associated with two different single-TRP measurement hypotheses with a plurality of CMRs from a plurality of different CMR groups. Support of X = 1, 2 is an optional UE feature for the UE supporting Option 1.

{Mode 2}

The UE is configured to report one piece of CSI associated with one best hypothesis of NCJT and single-TRP measurement hypotheses.

In mode 1, the UE reports (X + 1) pieces of CSI in total including X (X = 0, 1, 2) piece(s) of single-TRP CSI and one piece of NCJT CSI. In mode 2, the UE reports one best piece of CSI (one piece of CSI) among all pieces of single-TRP CSI and one piece of

NCJT CSI.

In one CSI report, up to two pieces of single-TRP CSI and one piece of NCJT CSI can be reported (mode 1 with X = 2). NCJT CSI includes one CRI, two RIs (with one joint RI index), two PMIs, two LIs, and one CQI (four layers or less). Single-TRP CSI, same as existing CSI, includes one CRI, one RI/PMI/LI, and one or two CQIs (eight layers or less, one CQI per CW).

For some of the following cases, a new mapping order (table) of a plurality of fields in one CSI report is defined.

- Mapping order of wideband CSI for mode 1 with X = 0. Wideband CSI is supported only for mode 1 with X = 0, i.e., NCJT CSI.
- Mapping order of CSI part 1 for modes 1 and 2
- Mapping order of CSI part 2 wideband for modes 1 and 2
- Mapping order of CSI part 2 subband for modes 1 and 2

(CJT)

For Rel. 18, support of coherent joint transmission (CJT, mTRP CJT) using up to four TRPs is under study. Data from four TRPs may be coherently precoded and transmitted to the UE on the same time-frequency resource. For example, the same precoding matrix may be used in consideration of channels from four TRPs. Coherent may mean that phases of a plurality of received signals have a certain relationship with each other. Signal quality may be improved by using 4-TRP joint precoding, and there may be no interference between the four TRPs places. The data may receive only interference outside the four TRPs.

In an ideal case (where the four TRPs are collocated (assumed to be located at the same location)), joint estimation of aggregated channel matrix H can be performed and joint precoding matrix V can be fed back. However, there is a case where large-scale path losses of four paths are significantly different from each other. Joint precoding matrix V based on a constant module codebook is not exact. In this case, feedback per TRP and an inter-TRP coefficient can be consistent with each other by a type 2 codebook of existing NR.

For CJT with up to four TRPs in FR1, selection of four TRPs may be semi-static. Thus, the selection and configuration of four CMRs (four CSI-RS resources) for channel measurement may also be semi-static. Dynamic indication of four TRPs from a list of CSI-RS resources is also available, but is unlikely.

Path losses from the respective four TRPs to the UE are different from each other. Thus, it is difficult to perform the dynamic indication only by reporting one piece of aggregated CSI indicating a joint channel matrix.

In consideration of operation for fallback to NCJT (that is, a single TRP), CSI per TRP (that is, single-TRP CSI such as NCJT CSI of Rel. 17) is also conceivable.

(CJT CSI)

Based on the assumption of ideal backhaul, synchronization, and the same number of antenna ports across a plurality of TRPs, CSI acquisition for coherent joint transmission (CJT) for FR1 and up to four TRPs is under study. For CJT multi-TRP for FDD, improvement of a type 2 codebook of Rel. 16/17 is under study.

As CSI enhancement for CJT, the following is under study.

- CMR and IMR for measurement of up to four TRPs
- CSI per TRP with inter-TRP CSI feedback for x-TRP CJT
- Inter-TRP CSI: new feedback and codebook for inter-TRP phasing matrix/inter-TRP amplitude matrix/inter-TRP matrix (including both amplitude and phase)
- Additional reportable x-TRP CJT CQI

As multi-TRP CJT CSI, the following is under study.

- Limitation to configuration for CMR/CSI for each TRP
- Inter-TRP CSI/PMI (for example, inter-TRP phase with/without inter-TRP amplitude)

  {Option 1} Independent codebook and feedback in addition to Rel-16/17 type 2 codebook
  {Option 2} $W_2$ of inter-TRP CSI/PMI communicated with/in $W_l \tilde{} W_{f,l}^H$ Common/different FD bases for a plurality of TRPs.

As multi-panel type 2 CSI for multi-TRP CJT, the following is under study.

- Enhancement, for multi-panel, of type 2 codebook and type 2 PS codebook of Rel. 16/17
- New antenna configuration for type 2 multi-panel codebook

$W_1$ (SD bases)/$W_f$ (FD bases) for respective TRPs may be the same or different from each other. $W_l$ (NZCs) for the respective TRPs may be different from each other. $W_1/W_f/W_l$ for the respective TRPs may be selected jointly or individually. It is preferable that different scenarios with different options are present for designs of $W_1/W_f/W_l$. $W_\varphi$ may be reported as an individual content, or may be reported in $W_l$. These used policies relate to an arrangement scenario (for example, intra-site multi-TRP or inter-site multi-TRP).

For example, a precoding matrix for 4-TRP CJT CSI (codebook) may be indicated by $W_1/W_f/W_l$ for the respective TRPs. $W_1$ for the respective TRPs may be the same or different from each other, and may be selected jointly or individually. $W_l$ for the respective TRPs may be different from each other, and may be selected jointly or individually. $W_f$ for the respective TRPs may be the same or different from each other, and may be selected jointly or individually.

In a (Rel-18) type 2 codebook (codebook structure) for CJT multi-TRP (mTRP), at least one of some codebook modes (codebook modes) below may be supported.

{Mode 1}

SD/FD basis selection for each TRP/each TRP group. This allows independent FD basis selection across N TRP/TRP groups. For example, the codebook structure is given by the following expression. Here, N is the number of TRPs or TRP groups.

$$\begin{bmatrix} W_{1,1}\widetilde{W}_{2,1}W_{f,1}^H \\ \vdots \\ W_{1,N}\widetilde{W}_{2,N}W_{f,N}^H \end{bmatrix} \qquad (Z1)$$

{Mode 2}

SD basis selection per TRP/TRP group (port group or resource) and joint/common FD basis selection (across N TRP/TRP groups). For example, the codebook structure is given by the following expression. Here, N is the number of TRPs or TRP groups.

$$\begin{bmatrix} W_{1,1}\widetilde{W}_{2,1}W_f^H \\ \vdots \\ W_{1,N}\widetilde{W}_{2,N}W_f^H \end{bmatrix} \qquad (Z2)$$

In these two modes, detailed designs such as parameter combination, basis selection, TRP (group) selection, reference amplitude, and a $W_2$ quantization scheme may be in common.

In type 2 codebook improvement, it is studied that selection of N CSI-RS resources is performed by a UE and the N CSI-RS resources are reported as part of a CSI report. Here, $N \in \{1, ..., N_{TRP}\}$ holds. N denotes the number of CSI-RS resources to cooperate. $N_{TRP}$ denotes the maximum number of CSI-RS resources to cooperate and is configured by a base station via higher layer signaling. It is studied that selection of N from $N_{TRP}$ CSI-RS resources is reported via an $N_{TRP}$-bit bitmap in CSI part 1. For example, when four TRPs are configured and the UE selects the first and third TRPs, the UE may report a bitmap [1010] indicating the selection. Configuration of restriction of $N = N_{TRP}$ may be supported and configured by a base station by higher layer signaling. For example, when four TRPs are configured, the UE may report CJT CSI assuming 4-TRP CJT. When the restriction is configured, $N_{TRP}$-bit bitmap need not be reported. Only one transmission hypothesis is reported, and the UE is not required to calculate pieces of CSI for a plurality of transmission hypotheses.

For improvement of a type 2 codebook for CJT mTRP, it is studied that a base station configures a set (list, candidate) of $N_L$ combinations of a plurality of values related to SD basis selection (SD basis vector selection, the number of SD basis vectors, the number L of beams) (combinations of $N_{TRP}$ values $L_i \{L_1, ..., L_{N\_TRP}\}$, i = 1, ..., $N_{TRP}$, $L_i$ corresponds to TRP #i) for a configuration value of $N_{TRP}$ via higher layer (RRC) signaling. In a case of $N_L > 1$, a combination of a plurality of values $\{L_1, ..., L_{N\_TRP}\}$ selected from the $N_L$ configured combinations is reported in CSI part 1 by using an indicator. $N_L = 1$ corresponds to one of a plurality of candidate values for $N_L$ supported by the UE. According to exiting design, SD basis selection for the n-th (n = 1, ..., N) selected CSI-RS resource is indicated in CSI part 2 by using combination indicators selected from a set of C ($P_{CSI-RS}/2$, $L_n$) codepoints. Here, $P_{CSI-RS} = 2 * N_1N_2$ holds in improvement based on Rel. 16. A plurality of candidate values supported for $L_n$ respective parameters include a plurality of existing candidate values, i.e., L candidate values {2, 4, 6} in improvement based on Rel. 16. In improvement based on Rel. 17, a base station configures a set of $N_L$ combinations for $\{\alpha_1, ..., \alpha_{N\_TRP}\}$, $L_n = \alpha_n P_{CSI-RS}/2$, and $\alpha_n = \{1/2, 3/4, 1\}$. According to exiting design, an SD basis oversampling group for each CSI-RS resource is indicated in CSI part 2 by using an indicator selected from a set of $O_1O_2$ codepoints, in all the selected N CSI-RS resources.

However, the relationship between an $N_{TRP}$-bit bitmap and an indicator for a combination corresponding to one or more TRPs is not clear. In addition, whether the value L is 0 is not clear. Unless such operation is clear, throughput/communication quality degradation and the like may be caused.

In view of this, the inventors of the present invention came up with the idea of a method of reporting an SD basis in mTRP CJT CSI.

Embodiments according to the present disclosure will be described in detail with reference to the drawings as follows. Note that respective embodiments (for example, respective cases) below may each be employed individually, or at least two of the respective embodiments may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, "to have a capability of ..." may be interchangeably interpreted as "to support/report a capability of ...".

In the present disclosure, $a_b{}^c$ and a_b^c may be interchangeably interpreted. In the present disclosure, $a_b$ and a_b may be interchangeably interpreted. In the present disclosure, $a_c$ and a^c may be interchangeably interpreted. In the present disclosure, ceil(x) and a ceiling function may be interchangeably interpreted. In the present disclosure, floor(x) and a floor function may be interchangeably interpreted.

In the present disclosure, a basis, a DFT basis, a basis vector, and a DFT basis vector may be interchangeably interpreted. In the present disclosure, an SD basis, an SD-DFT basis, a beam, an SD beam, an SD vector, an SD 2D-DFT vector, and an SD basis vector may be interchangeably interpreted. In the present disclosure, L, the number of SD beams, the number of beams, and the number of SD 2D-DFT vectors may be interchangeably interpreted. In the present disclosure, an FD basis, an FD-DFT basis, $f_i$, an FD beam, an FD vector, an FD basis vector, and an FD-DFT basis vector may be interchangeably interpreted.

In the present disclosure, a combination coefficient, an LC coefficient, a subband complex LC coefficient, and a combination coefficient matrix may be interchangeably interpreted. In the present disclosure, co-phasing, phase compensation, phasing, phase difference, a phase relationship, phase combination, and a phase may be interchangeably interpreted. In the present disclosure, difference and relative may be interchangeably interpreted. In the present disclosure, an amplitude and an amplitude coefficient may be interchangeably interpreted. In the present disclosure, a phase and a phase coefficient may be interchangeably interpreted. In the present disclosure, a strongest coefficient, a strongest amplitude coefficient, and a strongest amplitude may be interchangeably interpreted. In the present disclosure, a quantization table and a quantization method may be interchangeably interpreted.

In the present disclosure, a size, a length, and a number may be interchangeably interpreted.

In the present disclosure, CJT, mTRP CJT, and CJT mTRP may be interchangeably interpreted.

(Radio Communication Method)

In each embodiment, a TRP, a CMR, an NZP-CSI-RS resource, and a CRI may be interchangeably interpreted. In each embodiment, a group/set of TRPs, a group/set of CMRs, a group/set of NZP-CSI-RS resources, and a group/set of CRIs may be interchangeably interpreted.

In each embodiment, the number of TRPs for CJT, N, $N_{TRP}$, X, and $N_g$ may be interchangeably interpreted. In each embodiment, X TRPs, X-TRP, X panels, and $N_g$ panels may be interchangeably interpreted. In each of the respective embodiments, CJT using X TRPs, CJT using X panels, and X-TRP CJT may be interchangeably interpreted.

In each of the respective embodiments, reference CSI, CSI for a reference TRP, and CSI to be reported first may be interchangeably interpreted. In each of the respective embodiments, a reference TRP, CSI corresponding to reference CSI, a TRP corresponding to CSI to be reported first, and a CSI-RS resource/CMR/CMR group/CSI-RS resource set corresponding to CSI to be reported first may be interchangeably interpreted. In each of the respective embodiments, a TRP, a CSI-RS resource, a CMR, a CMR group, and a CSI-RS resource set may be interchangeably interpreted.

In each of the respective embodiments, multi-TRP, multi-panel, intra-site multi-TRP, and inter-site multi-TRP may be interchangeably interpreted.

In each of the respective embodiments, inter-TRP, inter-panel, inter-TRP difference, and inter-TRP comparison may be interchangeably interpreted.

In each of the respective embodiments, inter-TRP CSI, inter-TRP CJT CSI, inter-panel CSI, CSI for another TRP relative to CSI for a reference TRP, and CSI for another TRP relative to CSI for a reference panel may be interchangeably interpreted. In each of the respective embodiments, per-TRP CSI and per-panel CSI may be interchangeably interpreted.

In each of the respective embodiments, an inter-TRP phase index and an inter-TRP co-phasing (phasing) index may be interchangeably interpreted. In each of the respective embodiments, an inter-TRP index and an inter-TRP coefficient index may be interchangeably interpreted. In each of the respective embodiments, an inter-TRP phase matrix and an inter-TRP co-phasing (phasing) matrix may be interchangeably interpreted. In each of the respective embodiments, an inter-TRP matrix and an inter-TRP coefficient matrix may be interchangeably interpreted. In each of the respective embodiments, an inter-TRP phase codebook and an inter-TRP co-phasing (phasing) codebook may be interchangeably interpreted. In each of the respective embodiments, an inter-TRP codebook and an inter-TRP coefficient codebook may be interchangeably interpreted.

In each of the respective embodiments, reporting/contents of CSI may be applied to subband reporting or to wideband reporting.

In each example of CSI in drawings of the embodiments, pieces of CSI for X TRPs may include CSI of the first TRP to CSI of the X-th TRP. CSI of the i-th TRP in the drawings of the embodiments indicates the number/locations of NZCs by a $2L_i$-row (SD beam) $M_i$-column (FD basis) matrix. $M_i$ may be a value M common to X TRPs or may be an individual value for each TRP.

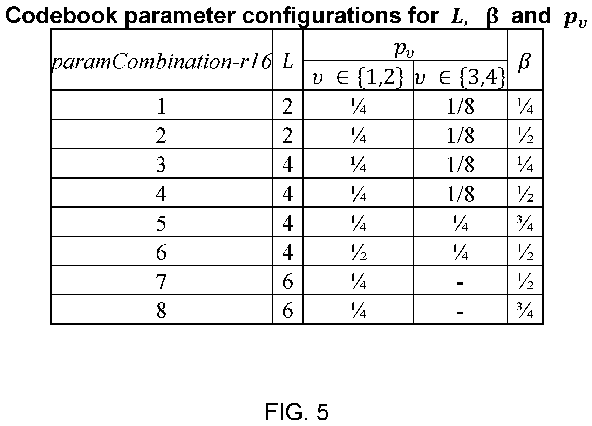

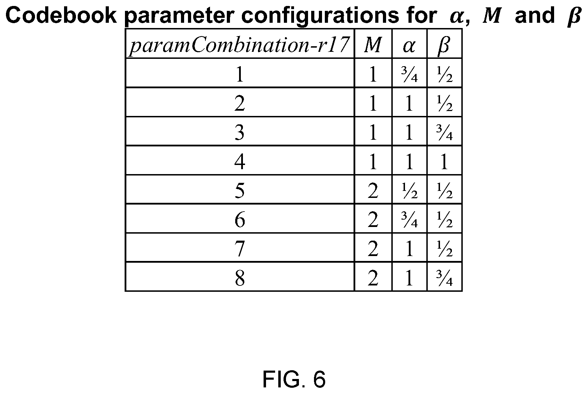

FIG. 5 shows an example of parameter combinations for a Rel-16 type 2 codebook. FIG. 6 shows an example of parameter combinations for a Rel-17 type 2 port selection codebook.

In each embodiment, a parameter LL for an SD basis/SD basis vector, the number L of beams, a codebook parameter $\alpha$, a codebook parameter configuration, a parameter combination, a parameter, a parameter related to the number of SD basis vectors, one or more parameters related to the number of SD basis vectors for a plurality of transmission points, an LL, an $LL_i$ for TRP #i (i = 1, 2, ...), an LL common to a plurality of TRPs, an $LL_{tot}$ across a plurality of TRPs, and a plurality of parameters $LL_i$ corresponding to a plurality of respective TRPs #i may be interchangeably interpreted.

<Issue #B2>

Interpretation #1 (NZC parameter 1) of the "same $\beta$ for all TRPs" (NZC parameter a) is that the same $\beta$ is configured for each TRP, and the maximum number of NZCs for each layer or all layers is considered for each TRP. For example, in a case of $\beta = 1/2$, 50% of NZCs at maximum are reported for one layer for each TRP.

Interpretation #2 of the "same $\beta$ for all TRPs" (NZC parameter a) may be that one configured $\beta$ is applied to all TRPs, for all TRPs for restricting the total number of NZCs for all TRPs. Irrespective of the maximum number of NZCs per TRP, one configured $\beta$ may be applied to all TRPs.

The maximum number of the total number of NZCs for each layer may be considered for each layer for all TRPs (irrespective of restriction per TRP).

The maximum number of the total number of NZCs for all layers for all TRPs (irrespective of restriction per TRP) may be considered.

In a (Rel-16) enhanced type 2 codebook or (Rel-17) enhanced type 2 port selection codebook, a bitmap is used to indicate NZCs in $W_2$. At least one '1' is present in the bitmap.

In CJT CSI of Rel. 18 or later versions, $W_2$ is selected jointly for a plurality of TRPs, in consideration of the CJT CSI codebook structure described above. It is not clear whether or not no NZC being selected/reported for a given TRP is permitted in a bitmap for NZCs.

<Embodiment #B2>

This embodiment relates to Issue #B2. A UE may follow any of some choices below.

<<Choice 1>>

No NZC being selected/reported for one TRP is permitted. At least one NZC per TRP is selected/reported. The minimum number of NZCs selected/reported for one TRP may be one.

At least one '1' may be present in a bitmap indicating an NZC(s) per TRP. Signaling may correspond to an individual bitmap for each TRP or may correspond to one combined bitmap for a plurality of TRPs.

<<Choice 2>>

No NZC being selected/reported for one TRP is permitted. The minimum number of NZCs selected/reported for one TRP may be zero.

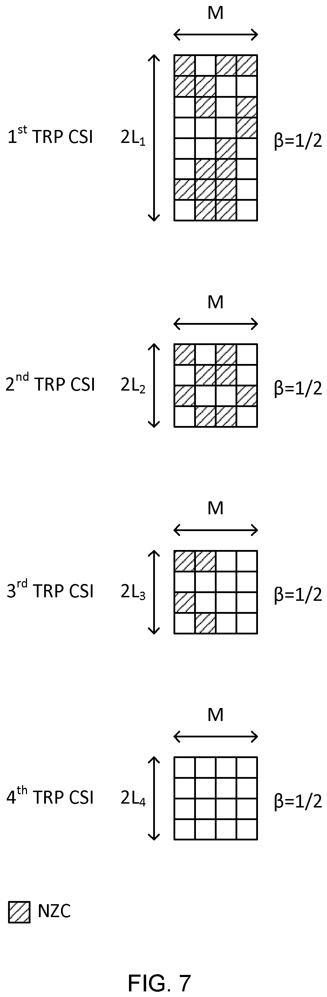

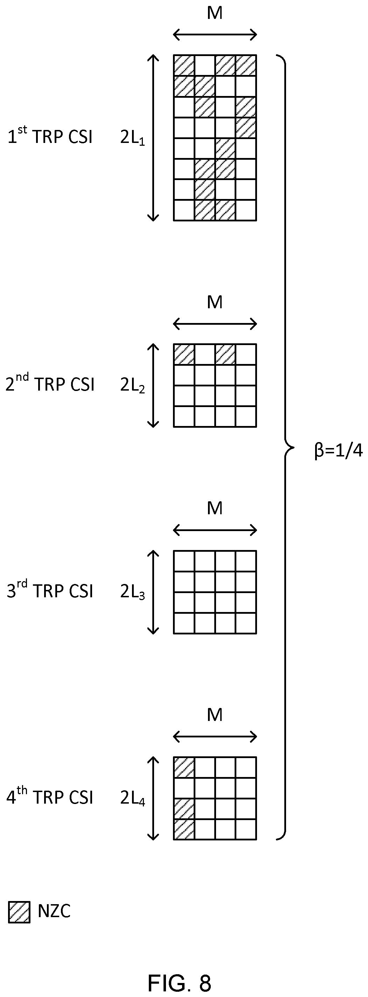

In the examples in FIG. 7 and FIG. 8, the number $M_i$ of FD bases for four TRPs is a common value M = 4, the number $2L_1$ of SD beams for the first TRP is eight ($2L_1 = 8$), and the numbers $2L_2$, $2L_3$, and $2L_4$ of SD beams for other TRPs are each four ($2L_2 = 2L_3 = 2L_4 = 4$). Hence, the number $2L_1 * M$ of coefficients for the first TRP on one layer is 32 ($2L_1 * M = 32$), and the numbers $2L_2 * M$, $2L_3 * M$, and $2L_4 * M$ of coefficients for the other TRPs on the layer are each 16 ($2L_2 * M = 2L_3 * M = 2L_4 * M = 16$). In this example, the number $M_i$ of FD bases is a value common to X TRPs but may be an individual value for each TRP. $\beta = 1/2$ restricts the maximum number of NZCs to be reported for each TRP. The number of NZCs to be actually reported may be smaller than the maximum number of NZCs.

In the example in FIG. 7, interpretation #1 and $\beta = 1/2$ are used, and no NZC is selected/reported in the fourth TRP CSI. In the example in FIG. 8, interpretation #2 and $\beta = 1/4$ are used, and no NZC is selected/reported in the third TRP CSI. In choice 1, at least one of the examples in FIG. 7 and FIG. 8 need not be permitted. In choice 2, at least one of the examples in FIG. 7 and FIG. 8 may be permitted.

A special case where all selected/reported NZCs are obtained from the same one TRP may be permitted.

When no NZC is selected/reported for one TRP, a bitmap indicating an NZC(s) for the TRP may be omitted in reporting. This can reduce overhead of the reporting.

To make sure that a UE and a base station have common understanding regarding a bitmap for which TRP is to be omitted, the UE/base station may follow at least one of some choices below.

{Choice 2-1}

The number of actual (reported) NZCs for each TRP is reported in CSI part 1 having a fixed size. For example, when [8, 2, 3, 0] is reported as the numbers of NZCs for four TRPs, there may be no bitmap and no NZC for the fourth TRP in CSI part 2 having a variable size.

{Choice 2-2}

The total number of actual (reported) NZCs for all TRPs is reported in CSI part 1 having a fixed size. One or more additional bits (bitmap) for indicating whether or not each TRP has an NZC(s) may be used. For example, when "13" is reported as the total number of NZCs, an additional bitmap 1110 for indicating whether or not each TRP has an NZC(s) may be used. The value '0' in the bitmap may mean that the fourth TRP has no NZC. A bit position i in the bitmap may correspond to the i-th TRP.

UE capability related to supporting of omission of a TRP-specific NZC bitmap may be introduced. For example, only when CJT CSI codebook structure 2 described above is supported and corresponding UE capability is reported, reporting using this choice 2 may be configured.

An RRC configuration indicating either of choices 1 and 2 of this embodiment may be supported/introduced.

The maximum number of TRPs to which omission of a bitmap can be applied may be restricted. For example, reporting of a bitmap/NAC for up to one TRP may be omitted.

According to this embodiment, a UE can appropriately report an NZC(s) for each TRP.

<Embodiment #B3>

This embodiment relates to choice 2 of Embodiment #B2. If no NZC is selected/reported for a given TRP, it is not clear whether reporting of an SD basis for the TRP is necessary (by assuming that an NW configures for a UE to report pieces of CJT CSI of N TRPs) .

A UE may follow any of some choices below.

{Choice 3-1}

If no NZC is selected/reported for a given TRP, an SD basis for the TRP is reported in $W_1$. In this case, the UE may maintain CJT CSI reports for N TRPs as configured.

{Choice 3-2}

If no NZC is selected/reported for a given TRP, an SD basis for the TRP is omitted and not reported.

If choice 2-1/2-2 in embodiment #B2 is applied and reporting of a bitmap and an NZC(s) for a given TRP is not indicated, a UE need not report a CRI index or a TRP index and need not report an SD basis index for the TRP either. In this case, overhead of CSI reporting can further be reduced.

UE capability related to supporting of omission of a TRP-specific SD basis may be introduced. For example, only when a corresponding UE capability is reported, choice 3-2 may be supported and configured.

The UE may report pieces of CJT CSI of (N - 1), (N - 2), ... TRPs.

RRC configuration between choices 3-1 and 3-2 may be supported.

The maximum number of TRPs to which omission of choice 3-2 can be applied may be restricted. For example, a bitmap and an NZC(s) for up to one TRP may be omitted.

According to this embodiment, even when no NZC is selected/reported for a given TRP, a UE can appropriately report CJT CSI.

<Embodiment #C1>

This embodiment relates to configuration related to the number of SD basis vectors. The number of SD basis vectors may be configured by a parameter in paramCombination (for example, paramCombination-rX, X may be 18 or larger). For example, the parameter may be LL or may be another parameter. Configuration of the number of SD basis vectors may follow at least one of some options/variations below.

<<Option 1>>

To configure a different number of SD basis vectors for each TRP/TRP group, either of options 1a and 1b below is used.

{Option 1a}

Individual paramCombination is configured for each TRP/TRP group. For each TRP/TRP group, a different value of a parameter combination (paramCombination) may be configured.

{Option 1b}

Individual LL is configured for each TRP/TRP group. A different value of LL may be configured for each TRP/TRP group. A parameter other than LL in paramCombination may be a value for each TRP, a value common to a plurality of TRPs, a value for each TRP group, or a value common to a plurality of TRP groups.

<<Option 2>>

To configure the same number of SD basis vectors for all TRPs/TRP groups, either of options 2a and 2b below is used.

{Option 2a}

paramCombination common to all TRPs/TRP groups is configured.

{Option 2b}

LL common to all TRPs/TRP groups is configured. For example, an LL common to TRPs #1/#2/#3/#4 may be configured. A parameter other than LL in paramCombination may be a value for each TRP, a value common to a plurality of TRPs, a value for each TRP group, or a value common to a plurality of TRP groups.

<<Option 3>>

The total number of SD basis vectors for all TRPs/TRP groups is configured via paramCombination or an LL.
When the number of SD basis vectors configured in option 1/2 is not the number of actual SD basis vectors in reporting but is the maximum number of SD basis vectors, option 3 may be combined with option 1/2. For example, when a UE determines the number of actual SD basis vectors for each TRP, the UE may regard a value configured in option 1/2 as restriction of the maximum number per TRP/TRP group.

<<Variation>>

For example, a different option may be configured/used for a plurality of different codebook modes.
According to this embodiment, a UE can appropriately be configured with the numbers of SD basis vectors.

<Embodiment #C2>

This embodiment relates to selection of an SD basis vector(s) by a UE. In this embodiment, a number to be configured may be indicated by configuration related to the number of SD basis vectors in embodiment #C1. A UE may follow at least one of some choices/variations below.

<<Choice 1>>

The UE follows a number $LL_i$ configured for selection and reporting of an SD basis vector(s) for each TRP #i.
This choice may be applied to option 1/2 of embodiment #C1. For example, in a case of $LL_1 = 4$, $LL_2 = 2$, $LL_3 = 1$, and $LL_4 = 1$, the UE may report four SD basis vectors to TRP #1, report two SD basis vectors for TRP #2, report one SD basis vector for TRP #3, and one SD basis vector for TRP #4.
For this choice, the following enhancement may be needed for option 3 of embodiment #C1.

{Enhancement}

A UE needs to determine the number of SD basis vectors to be selected for each TRP/TRP group. The UE may further report the number of SD basis vectors to be selected for each TRP/TRP group or may report association between each SD basis vector and the ID of one TRP/TRP group. For example, in a case of LL = 6 (the total number of SD basis vectors for all TRPs), the UE may report two as the number of SD basis vectors for TRP #1, report two as the number of SD basis vectors for TRP #2, report one as the number of SD basis vectors for TRP #3, and one as the number of SD basis vectors for TRP #4.

<<Choice 2>>

A configured number may be the maximum number LL of SD basis vectors, and the UE may select/report LL SD basis vectors or less. The UE may need to determine the number of SD basis vectors to be selected for each TRP/TRP group. The UE may further report the number of SD basis vectors to be selected for each TRP/TRP group, may report the total number of SD basis vectors to be selected, or may report association between each SD basis vector and the ID of one TRP/TRP group. Such configuration (for example, configuration of the maximum number of SD basis vectors) may be enabled by a new RRC parameter.
The UE may follow either of choices 2a and 2b below.

{Choice 2a}

Even when the UE selects an SD basis vector(s) fewer than the configured LL, the UE may make sure that at least one SD basis vector is reported for each TRP/TRP group. To enable this choice, a new RRC parameter may be configured. In this case, when $LL_i = 1$ is configured for one TRP #i, the UE does not need to report the number of SD basis vectors to be selected for this TRP #i.

{Choice 2b}

The UE may determine that there is no SD basis vector to be reported for a given TRP/TRP group (the number of SD basis vectors to be reported is zero). To enable this choice, a new RRC parameter may be configured.

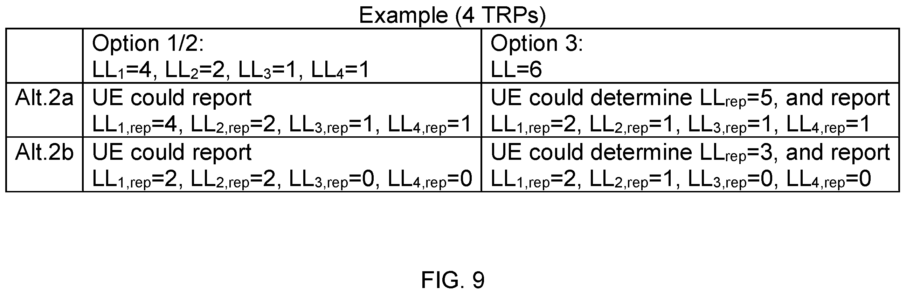

FIG. 9 shows an example of combinations of embodiment #C1 and embodiment #C2 for four TRPs #1, #2, #3, and #4. $LL_i$ denotes the number of SD basis vectors configured for TRP #i. $LL_{i,rep}$ denotes the number of SD basis vectors to be reported for TRP #i. LL denotes the total number of SD basis vectors configured for all TRPs. $LL_{rep}$ denotes the total number of SD basis vectors to be reported for all TRPs. In a case of $LL_1 = 4$, $LL_2 = 2$, $LL_3 = 1$, and $LL_4 = 1$ for a combination of option 1/2 of embodiment #C1 and choice 2a of embodiment #C2, the UE may report $LL_{1,rep} = 2$, $LL_{2,rep} = 2$, $LL_{3,rep} = 1$, and $LL_{4,rep} = 1$. In a case of $LL_1 = 4$, $LL_2 = 2$, $LL_3 = 1$, and $LL_4 = 1$ for a combination of option 1/2 of embodiment #C1 and choice 2b of embodiment #C2, the UE may report $LL_{1,rep} = 2$, $LL_{2,rep} = 2$, $LL_{3,rep} = 0$, and $LL_{4,rep} = 0$. In a case of LL = 6 for a combination of option 3 of embodiment #C1 and choice 2a of embodiment #C2, the number of SD basis vectors to be reported for each TRP is one or more, and hence $LL_{rep}$ is four or larger as the number of TRPs. In this case, the UE may determine $LL_{rep} = 5$ and report $LL_{1,rep} = 2$, $LL_{2,rep} = 1$, $LL_{3,rep} = 1$, and $LL_{4,rep} = 1$. In a case of LL = 6 for a combination of option 3 of embodiment #C1 and choice 2b of embodiment #C2, the UE may determine $LL_{rep} = 3$ and report $LL_{1,rep} = 2$, $LL_{2,rep} = 1$, $LL_{3,rep} = 0$, and $LL_{4,rep} = 0$.

<<Variation>>

For example, a different option/choice may be configured/used for a plurality of different codebook modes.

According to this embodiment, a UE can appropriately determine/report the numbers of SD basis vectors.

<Embodiment #D1>

When reporting of an SD basis (bases)/SD basis vector(s) is supported/configured, a base station may configure one or more candidate values for $LL_i$ for each TRP i, and a UE may select and report one of the one or more candidate values. When selection and reporting of an SD basis (bases)/SD basis vector(s) is supported/configured, the base station may configure one or more candidate values for $LL_{tot}$ for all TRPs, and the UE may select and report one of the one or more candidate values.

When $LL_i = 4$ is configured in embodiment #C1/#C2, $LL_i$ means the maximum value, and the UE can select and report $LL_{1,report} = \{1, 2, 3, 4\}$ or $\{0, 1, 2, 3, 4\}$. In embodiment #D1, the base station can configure the candidate value $LL_1 = \{2, 4\}$, and the UE can report $LL_{1,report} = \{2, 4\}$ or $\{0, 2, 4\}$. Whether or not selection and reporting of zero SD bases may be related to TRP selection configuration in embodiment #B2/#B3/#C1/#C2. The configuration may be configuration independent from configuration of LL.

At least one of UE capability related to the maximum value of $LL_i$ for each TRP i, UE capability related to a candidate value(s) for $LL_i$ for each TRP i, UE capability related to the maximum value of $LL_{tot}$ across a plurality of TRPs, and UE capability related to a candidate value(s) for $LL_{tot}$ across a plurality of TRPs may be introduced.

According to this embodiment, the UE can select/report appropriate values of LLs.

<Embodiment #D2>

An index (indices) of an SD basis vector(s) for each TRP i may be reported by ceil $(\log_2(C(N_1 N_2, LL_{i,} report)))$ bits. This size is the number of bits necessary to indicate $LL_{i,report}$ vectors selected from $N_1 N_2$ vectors. The index (indices) may be communicated in CSI part 2. For each TRP i, the size (number of bits) may be determined by $LL_{i,report}$. In this case, how $LL_{i,report}$ is reported and the size are not clear.

Embodiment #D2-1 or #D2-2 below may be applied to selection method 2 described above.

- Embodiment #D2-1

$LL_{i,report}$ for each TRP i may be reported in CSI part 1. The size of $LL_{i,report}$ may be fixed.

-- Option 1

The size of $LL_{i,report}$ for each TRP i may be determined by a configured maximum value $LL_{i,max}$ of $LL_i$ for each TRP i.

$LL_{i,report}$ may be reported by ceil $(\log_2(LL_{i,max}))$ bits. When $LL_i$,max = 4 is configured, 2 bits may be needed to indicate $LL_i$ = {1, 2, 3, 4}. TRP selection may be indicated by an $N_{TRP}$-bit bitmap. The $LL_i$ value to be reported for a TRP for which 0 (not selected) is reported may be omitted by an NW, but it is preferable that the size of reporting of the $LL_i$ value is occupied in a CSI report for a base station and a UE have common understanding related to the size of CSI part 1.

$LL_{i,report}$ may be reported by ceil $(\log_2(1 + LL_{i,max}))$ bits. When $LL_i$,max = 4 is configured, 3 bits may be needed to indicate $LL_i$ = {0, 1, 2, 3, 4}. No $N_{TRP}$-bit bitmap for indicating TRP selection may be needed.

-- Option 2

The size of $LL_{i,report}$ for each TRP i may be determined by the number $CandNo_i$ of candidate values for $LL_i$ for each TRP i.

$LL_{i,report}$ may be reported by ceil($\log_2(CandNo_i)$) bits. When two candidate values $LL_i$ = {2, 4} are configured, $CandNo_i$ = 2 holds, and 1 bit may be needed to indicate $LL_i$ = {2, 4}. TRP selection may be indicated by an $N_{TRP}$-bit bitmap. The $LL_i$ value to be reported for a TRP for which 0 (not selected) is reported may be omitted by an NW, but it is preferable that the size of reporting of the $LL_i$ value is occupied in a CSI report for a base station and a UE have common understanding related to the size of CSI part 1.

$LL_{i,report}$ may be reported by ceil $(\log_2(1 + CandNo_i))$ bits. When two candidate values $LL_i$ = {2, 4} are configured, $CandNo_i$ = 2 holds, and 2 bits may be needed to indicate $LL_i$ = {0, 2, 4}. No $N_{TRP}$-bit bitmap for indicating TRP selection may be needed.

- Embodiment #D2-2

$LL_{i,report}$ for each TRP i may be reported in new CSI part (for example, CSI part 1.5). CSI part 1.5 may be after CSI part 1 and before CSI part 2. The size of $LL_{i,report}$ may be determined by the contents reported in CSI part 1. A report value of $LL_{i,report}$ may determine the size of CSI part 2.

-- Option 3

The size of $LL_{i,report}$ for selected TRP i may be determined by a configured maximum value $LL_{i,max}$ of $LL_i$ for each TRP i.

$LL_{i,report}$ may be reported by ceil (log2($LL_{i,max}$)) bits. When $LL_i$,max = 4 is configured, 2 bits may be needed to indicate $LL_i$ = {1, 2, 3, 4}. For a TRP for which 0 (not selected) is reported by an $N_{TRP}$-bit bitmap for TRP selection, the UE need not report $LL_{i,report}$. The size of $LL_{i,report}$ for a TRP not selected may be 0 bits. For example, when $LL_i$,max = 4 is configured for selected TRP i, 2 bits may be needed to indicate $LL_i$ = {1, 2, 3, 4}.

-- Option 4

The size of $LL_{i,report}$ for selected TRP i may be determined by the number $CandNo_i$ of candidate values for $LL_i$ for each TRP i.

$LL_{i,report}$ may be reported by ceil($\log_2(CandNo_i)$) bits. For a TRP for which 0 (not selected) is reported by an $N_{TRP}$-bit bitmap for TRP selection, the UE need not report $LL_{i,report}$. The size of $LL_{i,report}$ for a TRP not selected may be 0 bits. For example, when two candidate values $LL_i$ = {2, 4} are configured for selected TRP i, $CandNo_i$ = 2 holds, and 1 bit may be needed to indicate $LL_i$ = {2, 4}.

-- Option 5

Since there is restriction of $L_{tot} = \Sigma_{n=1}^{N} L_n$, smaller $L_{tot}$ results in fewer possible combinations of $LL_{i,report}$. In a mathematic aspect, this corresponds to $L_{tot}$ being divided into X groups, and X may be the number of selected TRPs. Hence, combinations of $LL_{i,report}$ can be indicated by ceil $(\log_2(C(L_{tot}, (X - 1))))$ bits. The size of $LL_{i,report}$ for selected TRP i may be min{ceil($\log_2(C(L_{tot}, (X - 1)))$), ceil($\log_2(LL_{i,max})$)} bits.

-- Option 6

For a similar reason to that of option 5, the size of $LL_{i,report}$ for selected TRP i may be min{ceil($\log_2(C(L_{tot}, (X - 1)$

ceil($\log_2(_{CandNoi})$)} bits.

Option 1/2/3/4/5/6 described above may be applied to selection method 3/4 described above. When option 5/6 is applied, the total number $L_{tot,report}$ of SD basis vectors selected for all TRPs is preferably reported in CSI part 1 by a UE. The maximum number $L_{total,max,configured}$ of the total number of SD basis vectors for all TRPs may be configured, and the size of $L_{tot,report}$ may be related to the total number $L_{total,max,configured}$. For example, the size of $L_{tot,report}$ may be ceil ($\log_2(L_{total,max,configured})$) bits. For option 5, the size of $L_{tot,report}$ may be min{ceil($\log_2(C(L_{tot,report}, (X - 1)))$), ceil($\log_2(LL_{i,max})$)} bits. For option 6, the size of $L_{tot,report}$ may be min{ceil($\log_2(C(L_{tot,report}, (X - 1)))$), ceil($\log_2(LL_{i,max})$)} bits.

RRC signaling/UE capability for embodiment #D2-1/#D2-2/option 1/2/3/4/5/6 may be introduced.

A UE may initiate, after completion of decoding of CSI part 1, decoding of CSI part 1.5.

To enable embodiment #D2-2 (CSI part 1.5), coding (Polar coding) is preferably performed separately from CSI part 1 or CSI part 2, to enable mapping to an RE separately from that for CSI part 1 or CSI part 2.

The RE to which CSI part 1.5 is mapped may be at least one of REs 1 to 4 below.

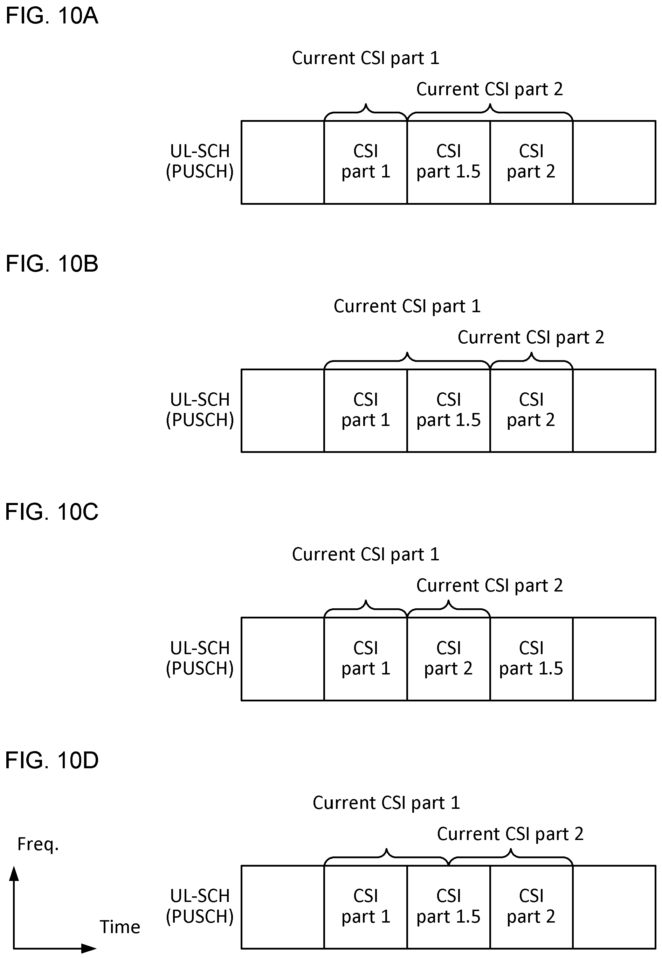

{RE 1} Part of existing CSI part 2 This case does not affect decoding of a UL-SCH (PUSCH)/CSI part 1 and affects only to decoding of CSI part 2. As in the example in FIG. 10A, CSI part 1.5 and new CSI part 2 may be mapped to REs for existing CSI part 2.

{RE 2} Part of existing CSI part 1 This case does not affect decoding of a UL-SCH (PUSCH)/CSI part 2 and affects only to decoding of CSI part 1. As in the example in FIG. 10B, new CSI part 1 and CSI part 1.5 may be mapped to REs for existing CSI part 1.

{RE 3} Part of existing UL-SCH This case does not affect decoding of CSI part 1/CSI part 2 and affects only to decoding of a UL-SCH (PUSCH). As in the example in FIG. 10C, CSI part 1.5 may be mapped to an RE other than REs for existing CSI part 1 and existing CSI part 2 in an existing UL-SCH.

{RE 4} Part of existing CSI part 1/2 New RE mapping for CSI part 1/1.5/2 may be introduced. This case does not affect decoding of a UL-SCH (PUSCH). As in the example in FIG. 10D, when CSI part 1.5 is reported, new CSI part 1, CSI part 1.5, and new CSI part 2 may be mapped to REs for existing CSI part 1 and existing CSI part 2.

When RE mapping in the time domain is in the order of CSI parts 1, 1.5, and 2, a base station can initiate decoding of each CSI part earlier. The base station may initiate decoding of a plurality of CSI parts in the same symbol.

According to this embodiment, a UE can appropriately report SD basis vectors corresponding to a plurality of TRPs.

<Embodiment #1>

When an NW configures a set of $N_L$ combinations of a plurality of values {$L_1$, ..., $L_{N\_TRP}$} corresponding to $N_{TRP}$ TRPs, $L_i = 0$ need not be a candidate value for $L_i$. For example, candidate values for $L_i$ may be $L_i = \{2, 4, 6\}$, $L_i = \{1, 2, 4, 6\}$, or $L_i = \{2, 4\}$ or may be other values. For example, the NW may configure $N_L = 4$ combinations for four TRPs. Each combination may indicate $N_{TRP} = 4$ $L_i$. $N_L = 4$ combinations may be [6, 4, 2, 2], [4, 2, 2, 2], [4, 4, 2, 2], or [4, 4, 4, 2] or may be other values. $N_L$ may be another value in a condition of UE capability related to a maximum value. For example, the maximum value may be {1, 2, 4, 8} or may be other values.

An $N_{TRP}$-bit bitmap may be reported together with an indicator for a combination in CSI part 1. With the two contents, the number of SD basis vectors for each TRP may be determined.

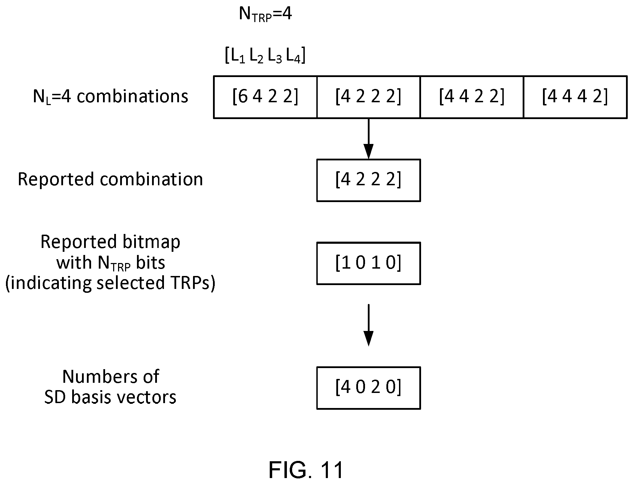

When the $N_{TRP}$-bit bitmap indicates that a given TRP is not selected, a corresponding value in the combination may be regarded as 0 for the TRP. For example, when the $N_{TRP}$-bit bitmap is [1010] and a reported combination is the second combination [4, 2, 2, 2] described above, this may mean that the numbers of SD basis vectors for four TRPs are [4, 0, 2, 0] (FIG. 11). In this case, in CSI part 2, a UE may need to report only the SD basis vectors for the first and third TRPs. This may mean that $L_i = 0$ can implicitly be a candidate value for reporting even when not being a candidate value for configuration (not being configured).

According to this embodiment, a UE can appropriately report a selected TRP(s) and a value related to the number of SD basis vectors for each TRP.

<Embodiment #2>

When an NW configures a set of $N_L$ combinations of a plurality of values in {$L_i$, ..., $L_{N\_TRP}$} for $N_{TRP}$ TRPs, $L_i = 0$ can be a candidate value for $L_i$. For example, candidate values for $L_i$ may be $L_i = \{0, 2, 4, 6\}$, $L_i = \{0, 1, 2, 4, 6\}$, or $L_i = \{0, 2, 4\}$ or may be other values. For example, the NW may configure $N_L = 6$ combinations for four TRPs. Each combination may indicate $N_{TRP} = 4$ $L_i$. $N_L = 4$ combinations may be [6, 4, 2, 2], [4, 2, 2, 0], [4, 4, 2, 2], [4, 4, 4, 21], [4, 0, 2, 2], or [4, 4, 0, 0] or may be other values. $N_L$ may be another value in a condition of UE capability related to a maximum value. For example, the maximum value may be {1, 2, 4, 8} or may be other values.

In a case of $N_L = 1$, this means that an NW configures only one combination, and a UE need not report the combination. However, in this case, option 1 or 2 below may be used for whether an $N_{TRP}$-bit bitmap is reported. As option 3/4 in variations, an $N_{TRP}$-bit bitmap may always be reported with restriction. When only one combination is configured, the restriction may be that all $L_i$ in the combination are non-zero values. For a TRP indicated as not being selected by a bitmap, the number of SD basis vectors may be recognized as 0.

- Option 1

No $N_{TRP}$-bit bitmap may be reported. No specification may define bitmap reporting. The UE may only need to report an indicator for a combination in CSI part 1. The indicator may include TRP selection information.

- Option 2

When there is the value $L_i$ being 0 in a configured combination, an $N_{TRP}$-bit bitmap need not be reported. Whether or not a bitmap is reported may be RRC-configured by using new signaling. When there is a value $L_i$ being 0 in a configured combination, the UE may recognize that bitmap reporting is needed in CSI part 1. In this case, embodiment #1 may be used.

- Option 3

An $N_{TRP}$-bit bitmap may be reported together with an indicator for a combination in CSI part 1. For TRP #i indicated to have been selected, the UE may also report a combination with the value $L_i$ to which non-zero corresponds. For TRP #i with the value $L_i$ to which non-zero corresponds, the UE may also report a bitmap indicating this TRP #i is selected.

- Option 4

The number of SD basis vectors for each TRP may be determined by an $N_{TRP}$-bit bitmap and an indicator for a combination in CSI part 1. When the $N_{TRP}$-bit bitmap indicates that given TRP #i is not selected, the value $L_i$ to which the combination corresponds may be regarded as 0 for this TRP #i. For TRP #i indicated to have not been selected, the UE may report a combination with the value $L_i$ to which zero corresponds. For example, when the $N_{TRP}$-bit bitmap is [1010] and a reported combination is the second combination [4, 2, 2, 0] described above, this may mean that the numbers of SD basis vectors for four TRPs are [4, 0, 2, 0]. The number of SD basis vectors for TRP #i not selected may be recognized as 0. For TRP #i with the value $L_i$ being zero in the combination, the UE may also report a bitmap indicating that this TRP #i is not selected.

According to this embodiment, a UE can appropriately report a selected TRP(s) and a value related to the number of SD basis vectors for each TRP.

<Supplements>

{Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

{Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

{Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:

- the maximum number of combinations of values related to the numbers of SD basis vectors
- configured candidate value(s) for $L_i$ for one TRP #i. For example, whether a candidate value 0 for $L_i$ is supported. For example, whether a candidate value 1 for $L_i$ is supported. For example, whether a candidate value 6 for $L_i$ is supported.
- maximum number of the total of $L_i$ (total number, $L_1 + ... + L_{N\_TRS}$) for all TRPs #i
- whether an $N_{TRP}$-bit bitmap report is omitted

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of the functions of each embodiment, any RRC parameter for specific release (for example, Rel. 18/19), or the like.

When not supporting at least one of the specific UE capabilities or not configured with the specific information, the UE may apply operation of Rel. 15/16, for example.

(Supplementary Notes)

Regarding one embodiment of the present disclosure, the following supplementary notes of the invention will be given.

{Supplementary Note 1}

A terminal including:

a receiving section that receives a configuration of a plurality of combinations of candidate values for a parameter related to numbers of spatial domain basis vectors for N transmission/reception points; and
a control section that controls reporting of one combination based on the plurality of combinations, based on the configuration.

{Supplementary Note 2}

The terminal according to supplementary note 1, wherein the plurality of combinations do not include a candidate value 0.

{Supplementary Note 3}

The terminal according to supplementary note 1 or 2, wherein at least one of the plurality of combinations includes a candidate value 0.

{Supplementary Note 4}

The terminal according to any one of supplementary notes 1 to 3, wherein

the control section controls reporting of a bitmap with N bits corresponding to the N respective transmission/reception points, and
the number of spatial domain basis vectors for a transmission/reception point corresponding to a value 0 in the bitmap is 0.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

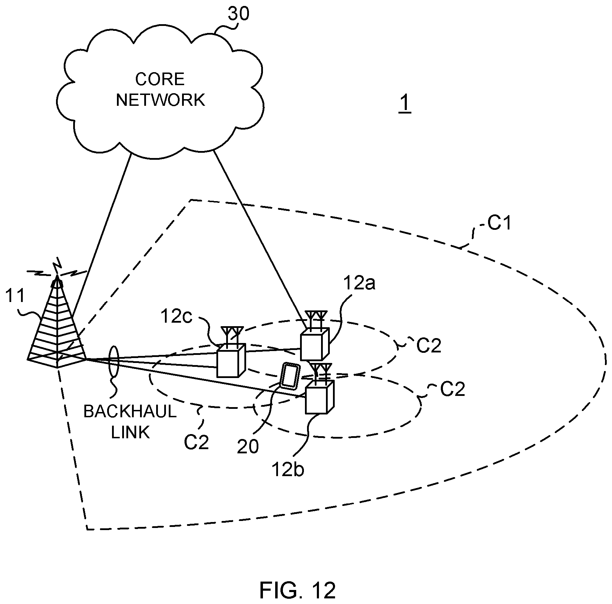

FIG. 12 is a diagram to show an example of a schematic structure of the radio communication system according to one embodiment. The radio communication system 1 (which may be simply referred to as a system 1) may be a system implementing a communication using Long Term Evolution (LTE), 5th generation mobile communication system New Radio (5G NR), and so on, whose specifications have been drafted by the Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs), such as a User Plane Function (UPF), an Access and Mobility management Function (AMF), a Session Management Function (SMF), Unified Data Management (UDM), an Application Function (AF), a Data Network (DN), a Location Management Function (LMF), and Operation, Administration and Maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information, and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

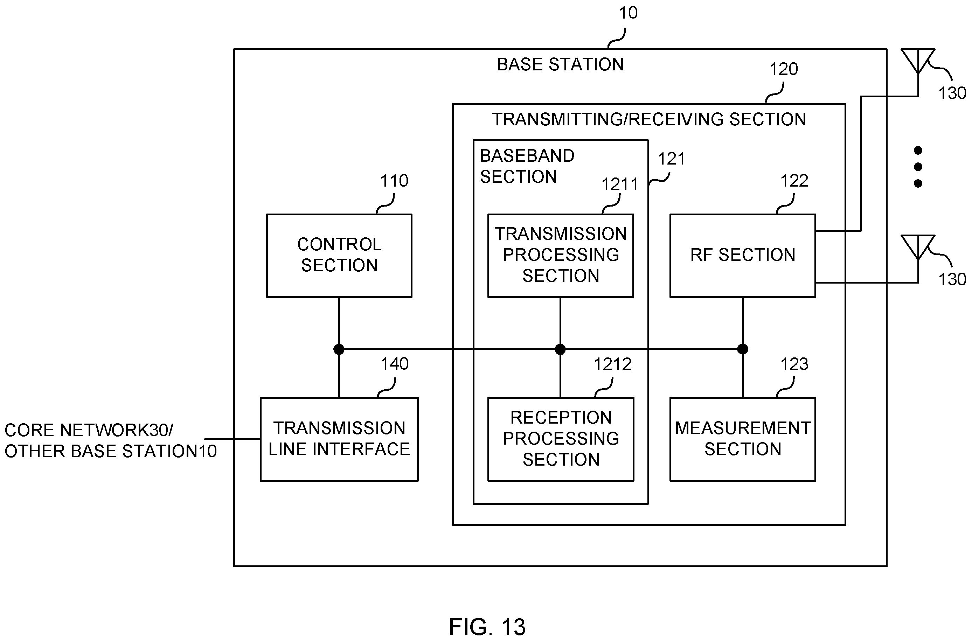

FIG. 13 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus (for example, a network node that provides NFs) included in the core network 30, other base stations 10, and so on, and, for example, acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a configuration of a plurality of combinations of candidate values for a parameter related to numbers of spatial domain basis vectors for N transmission/reception points. The control section 110 may control reception of reporting of one combination based on the plurality of combinations.

(User Terminal)

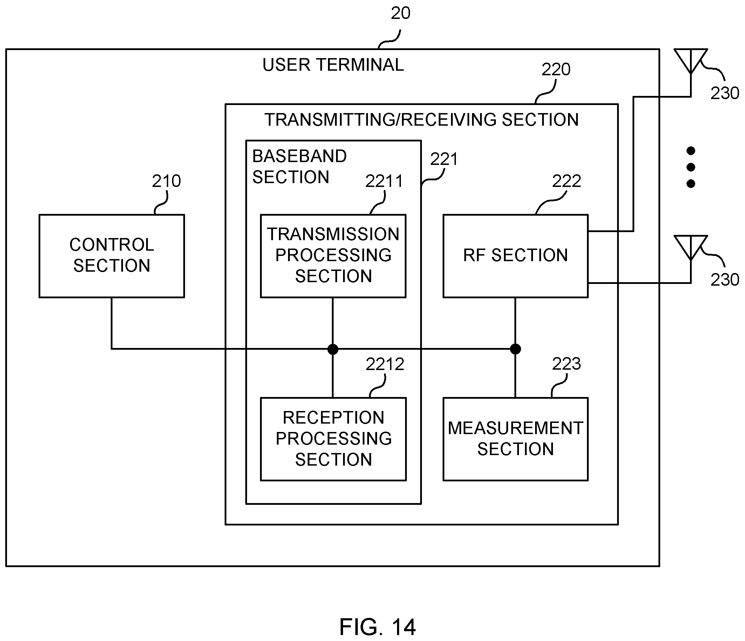

FIG. 14 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure received power (for example, RSRP), received quality (for example, RSRQ, SINR, SNR), signal strength (for example, RSSI), channel information (for example, CSI), or the like. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a configuration of a plurality of combinations of candidate values for a parameter related to numbers of spatial domain basis vectors for N transmission/reception points. The control section 210 may control reporting of one combination based on the plurality of combinations, based on the configuration.

The plurality of combinations need not include a candidate value 0.

At least one of the plurality of combinations may include a candidate value 0.

The control section may control reporting of a bitmap with N bits corresponding to the N respective transmission/reception points. The number of spatial domain basis vector for a transmission/reception point corresponding to a value 0 in the bitmap may be 0.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

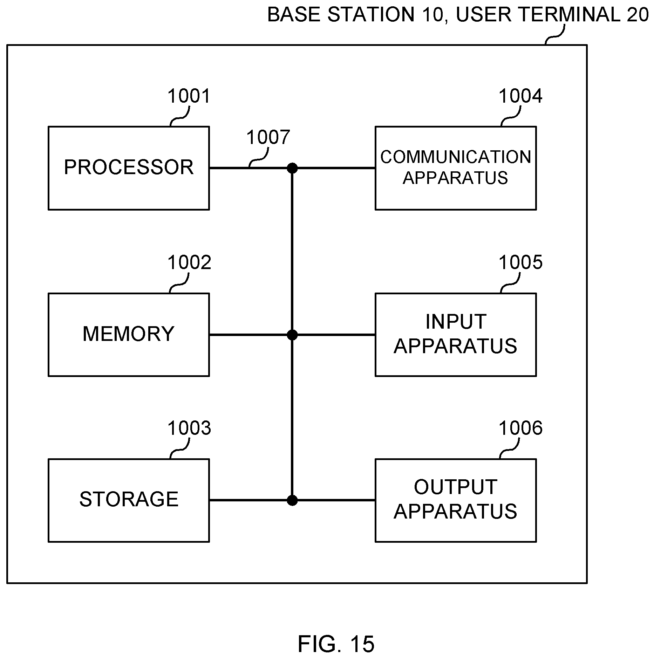

For example, a base station, a user terminal, and so on according to one embodiment of the present disclosure may function as a computer that executes the processes of the radio communication method of the present disclosure. FIG. 15 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

(Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

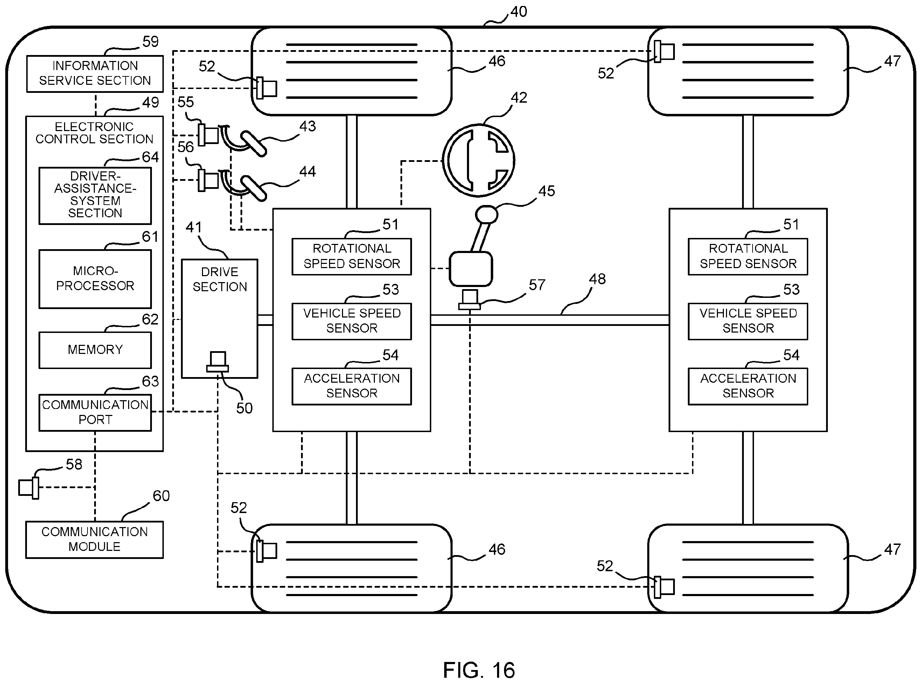

FIG. 16 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

This application is based on and claims priority to Japanese Patent Application No. 2022-184650, filed on November 18, 2022, the contents of which are incorporated herein by reference in their entirety.

**Claims**

1. A terminal comprising:

   a receiving section that receives a configuration of a plurality of combinations of candidate values for a parameter related to numbers of spatial domain basis vectors for N transmission/reception points; and
   a control section that controls reporting of one combination based on the plurality of combinations, based on the configuration.

2. The terminal according to claim 1, wherein
   the plurality of combinations do not include a candidate value 0.

3. The terminal according to claim 1, wherein
   at least one of the plurality of combinations includes a candidate value 0.

4. The terminal according to claim 1, wherein

   the control section controls reporting of a bitmap with N bits corresponding to the N respective transmission/reception points, and
   the number of spatial domain basis vectors for a transmission/reception point corresponding to a value 0 in the bitmap is 0.

5. A radio communication method for a terminal, the radio communication method comprising:

   receiving a configuration of a plurality of combinations of candidate values for a parameter related to numbers of spatial domain basis vectors for N transmission/reception points; and
   controlling reporting of one combination based on the plurality of combinations, based on the configuration.

6. A base station comprising:

   a transmitting section that transmits a configuration of a plurality of combinations of candidate values for a parameter related to numbers of spatial domain basis vectors for N transmission/reception points; and
   a control section that controls reception of reporting of one combination based on the plurality of combinations, based on the configuration.

Mapping of elements of $i_{2,3,l}$: $k_{l,p}^{(1)}$ to $p_{l,p}^{(1)}$

| $k_{l,p}^{(1)}$ | $p_{l,p}^{(1)}$ | $k_{l,p}^{(1)}$ | $p_{l,p}^{(1)}$ | $k_{l,p}^{(1)}$ | $p_{l,p}^{(1)}$ | $k_{l,p}^{(1)}$ | $p_{l,p}^{(1)}$ |
|---|---|---|---|---|---|---|---|
| 0 | Reserved | 4 | $\left(\dfrac{1}{2048}\right)^{1/4}$ | 8 | $\left(\dfrac{1}{128}\right)^{1/4}$ | 12 | $\left(\dfrac{1}{8}\right)^{1/4}$ |
| 1 | $\dfrac{1}{\sqrt{128}}$ | 5 | $\dfrac{1}{2\sqrt{8}}$ | 9 | $\dfrac{1}{\sqrt{8}}$ | 13 | $\dfrac{1}{\sqrt{2}}$ |
| 2 | $\left(\dfrac{1}{8192}\right)^{1/4}$ | 6 | $\left(\dfrac{1}{512}\right)^{1/4}$ | 10 | $\left(\dfrac{1}{32}\right)^{1/4}$ | 14 | $\left(\dfrac{1}{2}\right)^{1/4}$ |
| 3 | $\dfrac{1}{8}$ | 7 | $\dfrac{1}{4}$ | 11 | $\dfrac{1}{2}$ | 15 | 1 |

FIG. 1

Mapping of elements of $i_{2,4,l}$: $k_{l,i,f}^{(2)}$ to $p_{l,i,f}^{(2)}$

| $k_{l,i,f}^{(2)}$ | $p_{l,i,f}^{(2)}$ |
|---|---|
| 0 | $\dfrac{1}{8\sqrt{2}}$ |
| 1 | $\dfrac{1}{8}$ |
| 2 | $\dfrac{1}{4\sqrt{2}}$ |
| 3 | $\dfrac{1}{4}$ |
| 4 | $\dfrac{1}{2\sqrt{2}}$ |
| 5 | $\dfrac{1}{2}$ |
| 6 | $\dfrac{1}{\sqrt{2}}$ |
| 7 | 1 |

FIG. 2

FIG. 3A

Rel.15/16 Type II Port Selection

FIG. 3B

| Port 1 | $b_1$ | $b_1$ | ... |
|--------|-------|-------|-----|
| Port 2 | $b_2$ | $b_2$ | ... |
| Port 3 | $b_3$ | $b_3$ | ... |
| Port 4 | $b_4$ | $b_4$ | ... |
| Port 5 | $b_5$ | $b_5$ | ... |
| Port 6 | $b_6$ | $b_6$ | ... |
| Port 7 | $b_7$ | $b_7$ | ... |
| Port 8 | $b_8$ | $b_8$ | ... |

Frequency (delay)

## FIG. 4A

Rel.17 Type II Port Selection

gNB

Port 6
Port 5
Port 4
Port 3

The Same SD beam
but different FD beam

## FIG. 4B

| | | | |
|---|---|---|---|
| Port 1 | $b_1f_{1,0}$ | $b_1f_{1,1}$ | ... |
| Port 2 | $b_2f_{2,0}$ | $b_2f_{2,1}$ | ... |
| Port 3 | $b_3f_{3,0}$ | $b_3f_{3,1}$ | ... |
| Port 4 | $b_4f_{4,0}$ | $b_4f_{4,1}$ | ... |
| Port 5 | $b_5f_{5,0}$ | $b_5f_{5,1}$ | ... |
| Port 6 | $b_6f_{6,0}$ | $b_6f_{6,1}$ | ... |
| Port 7 | $b_7f_{7,0}$ | $b_7f_{7,1}$ | ... |
| Port 8 | $b_8f_{8,0}$ | $b_8f_{8,1}$ | ... |

Frequency (delay)

EP 4 622 128 A1

Codebook parameter configurations for $L$, $\beta$ and $p_v$

| *paramCombination-r16* | $L$ | $p_v$ | | $\beta$ |
| --- | --- | --- | --- | --- |
| | | $v \in \{1,2\}$ | $v \in \{3,4\}$ | |
| 1 | 2 | ¼ | 1/8 | ¼ |
| 2 | 2 | ¼ | 1/8 | ½ |
| 3 | 4 | ¼ | 1/8 | ¼ |
| 4 | 4 | ¼ | 1/8 | ½ |
| 5 | 4 | ¼ | ¼ | ¾ |
| 6 | 4 | ½ | ¼ | ½ |
| 7 | 6 | ¼ | - | ½ |
| 8 | 6 | ¼ | - | ¾ |

FIG. 5

**Codebook parameter configurations for** $\alpha$**,** $M$ **and** $\beta$

| paramCombination-r17 | $M$ | $\alpha$ | $\beta$ |
|---|---|---|---|
| 1 | 1 | ¾ | ½ |
| 2 | 1 | 1 | ½ |
| 3 | 1 | 1 | ¾ |
| 4 | 1 | 1 | 1 |
| 5 | 2 | ½ | ½ |
| 6 | 2 | ¾ | ½ |
| 7 | 2 | 1 | ½ |
| 8 | 2 | 1 | ¾ |

FIG. 6

FIG. 7

FIG. 8

Example (4 TRPs)

| | Option 1/2:<br>$LL_1=4$, $LL_2=2$, $LL_3=1$, $LL_4=1$ | Option 3:<br>$LL=6$ |
|---|---|---|
| Alt.2a | UE could report<br>$LL_{1,rep}=4$, $LL_{2,rep}=2$, $LL_{3,rep}=1$, $LL_{4,rep}=1$ | UE could determine $LL_{rep}=5$, and report<br>$LL_{1,rep}=2$, $LL_{2,rep}=1$, $LL_{3,rep}=1$, $LL_{4,rep}=1$ |
| Alt.2b | UE could report<br>$LL_{1,rep}=2$, $LL_{2,rep}=2$, $LL_{3,rep}=0$, $LL_{4,rep}=0$ | UE could determine $LL_{rep}=3$, and report<br>$LL_{1,rep}=2$, $LL_{2,rep}=1$, $LL_{3,rep}=0$, $LL_{4,rep}=0$ |

FIG. 9

# FIG. 10A

Current CSI part 1
Current CSI part 2

UL-SCH (PUSCH) | CSI part 1 | CSI part 1.5 | CSI part 2

# FIG. 10B

Current CSI part 1
Current CSI part 2

UL-SCH (PUSCH) | CSI part 1 | CSI part 1.5 | CSI part 2

# FIG. 10C

Current CSI part 1
Current CSI part 2

UL-SCH (PUSCH) | CSI part 1 | CSI part 2 | CSI part 1.5

# FIG. 10D

Current CSI part 1
Current CSI part 2

Freq.
Time

UL-SCH (PUSCH) | CSI part 1 | CSI part 1.5 | CSI part 2

$N_{TRP}=4$

$[L_1 \, L_2 \, L_3 \, L_4]$

$N_L=4$ combinations

| [6 4 2 2] | [4 2 2 2] | [4 4 2 2] | [4 4 4 2] |

Reported combination

| [4 2 2 2] |

Reported bitmap
with $N_{TRP}$ bits
(indicating selected TRPs)

| [1 0 1 0] |

Numbers of
SD basis vectors

| [4 0 2 0] |

FIG. 11

FIG. 12

FIG. 13

EP 4 622 128 A1

FIG. 14

BASE STATION 10, USER TERMINAL 20

1001
PROCESSOR

1007

1004
COMMUNICATION APPARATUS

1002
MEMORY

1005
INPUT APPARATUS

1003
STORAGE

1006
OUTPUT APPARATUS

FIG. 15

FIG. 16

## INTERNATIONAL SEARCH REPORT

| International application No. |
| --- |
| **PCT/JP2023/040989** |

**A.    CLASSIFICATION OF SUBJECT MATTER**

*H04B 7/0456*(2017.01)i; *H04W 24/10*(2009.01)i
FI:    H04B7/0456 300; H04W24/10

According to International Patent Classification (IPC) or to both national classification and IPC

**B.    FIELDS SEARCHED**

Minimum documentation searched (classification system followed by classification symbols)

H04B7/0456; H04W24/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | MEDIATEK INC. CSI enhancement [online]. 3GPP TSG RAN WG1 #111 R1-2212232. 07 November 2022<br>      section 3, fig. 5 | 1-2, 5-6 |
| A | | 3-4 |
| A | NTT DOCOMO, INC. Discussion on CSI enhancement [online]. 3GPP TSG RAN WG1 #111 R1-2211971. 07 November 2022<br>      section 2 | 1-6 |

☐ Further documents are listed in the continuation of Box C.          ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 January 2024** | **30 January 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022184650 A

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300*, April 2010